# EUROPEAN PATENT APPLICATION

(11) **EP 4 660 785 A2**
(43) Date of publication of application: **10.12.2025**
(21) Application number: 25204978.8
(22) Date of filing: 26.09.2025
(51) Int. Cl.: G06F 7/544, G06F 17/16

(54) **TENSOR COMPUTATION APPARATUS AND METHOD, CHIP, MEDIUM, AND DEVICE**

(30) Priority: 02.04.2025 CN 202510414019
(71) Applicant: Beijing Horizon Information Technology Co., Ltd., Beijing 100094 (CN)
(72) Inventor: DING, Jinnan, Beijing, 100094 (CN); HE, Yibo, Beijing, 100094 (CN)
(74) Representative: Dehns Germany Partnerschaft mbB

(57) **Abstract**

Embodiments of this disclosure disclose a tensor computation apparatus and method, chip, medium, and device. The apparatus includes: a memory (21), configured to store a first and a second tensor that are to be computed; a controller (22), configured to read the first and the second tensor, and an operation type; and a computation component (23), including a plurality of multiply-accumulate arrays (23i). Any one of the multiply-accumulate arrays is configured to determine a multiply-accumulate result of at least one pair of input values, where any pair includes a first and a second input value. The controller (22) is further configured to: determine, based on the first tensor, the second tensor, and the operation type, a target multiply-accumulate array (23i) from the plurality of multiply-accumulate arrays (23i), and determine a corresponding target control mode; and control, according to the target control mode, the target multiply-accumulate array (23i) to perform corresponding operations, to obtain a tensor computation result.

## Description

### FIELD OF THE INVENTION

This disclosure relates to technologies of integrated circuits, and in particular, to a tensor computation apparatus and method, a chip, a medium, and a device.

### BACKGROUND OF THE INVENTION

In application scenarios such as intelligent driving and intelligent cockpit, tensor computations such as convolution operations and matrix multiplication are usually implemented based on multiply-accumulate arrays in a chip. However, with increasing demand for computing power of the chip, a scale of the multiply-accumulate arrays in the chip is growing exponentially, posing significant challenges for a design and physical implementation of the chip.

### SUMMARY OF THE INVENTION

Embodiments of this disclosure provide a tensor computation apparatus and method, a chip, a medium, and a device, to improve layout friendliness and scalability of a tensor computation circuit.

According to a first aspect of an embodiment of this disclosure, a tensor computation apparatus is provided, including: a memory, configured to store a first tensor and a second tensor that are to be computed; a controller, configured to read the first tensor and the second tensor from the memory, and determine an operation type for the first tensor and the second tensor; and a computation component, including a plurality of multiply-accumulate arrays, wherein any one of the multiply-accumulate arrays is configured to determine a multiply-accumulate result of at least one pair of input values, any one pair of the input values includes a first input value and a second input value, the first input value is a value in the first tensor, and the second input value is a value in the second tensor. The controller is further configured to: determine, based on the first tensor, the second tensor, and the operation type, a target multiply-accumulate array for a current operation from the plurality of multiply-accumulate arrays of the computation component, and determine a target control mode corresponding to the target multiply-accumulate array; and control, according to the target control mode, the target multiply-accumulate array to perform operations corresponding to the operation type on the first tensor and the second tensor, to obtain a tensor computation result.

According to a second aspect of an embodiment of this disclosure, a tensor computation method is provided, including: obtaining a first tensor and a second tensor that are to be computed; determining an operation type for the first tensor and the second tensor; determining, based on the first tensor, the second tensor, and the operation type, a target multiply-accumulate array for a current operation from a plurality of multiply-accumulate arrays of a computation component, and determining a target control mode corresponding to the target multiply-accumulate array, wherein any one of the multiply-accumulate arrays is configured to determine a multiply-accumulate result of at least one pair of input values, any one pair of the input values includes a first input value and a second input value, the first input value is a value in the first tensor, and the second input value is a value in the second tensor; and controlling, according to the target control mode, the target multiply-accumulate array to perform operations corresponding to the operation type on the first tensor and the second tensor, to obtain a tensor computation result.

According to a third aspect of an embodiment of this disclosure, a computer readable storage medium is provided. The storage medium stores a computer program, when executed by a processor, causes the processor to implement the tensor computation method according to any one of the foregoing embodiments of this disclosure.

According to a fourth aspect of an embodiment of this disclosure, an electronic device is provided. The electronic device includes: a processor; and a memory configured to store processor-executable instructions. The processor is configured to read the executable instructions from the memory, and execute the instructions to implement the tensor computation method according to any one of the foregoing embodiments of this disclosure. Alternatively, the electronic device includes the tensor computation apparatus according to any one of the foregoing embodiments of this disclosure.

According to a fifth aspect of an embodiment of this disclosure, a computer program product is provided. When instructions in the computer program product are executed by a processor, the tensor computation method according to any one of the foregoing embodiments of this disclosure is implemented.

According to a sixth aspect of an embodiment of this disclosure, a chip is provided, including the tensor computation apparatus according to any one of the foregoing embodiments of this disclosure.

According to the tensor computation apparatus and method, the chip, the medium, and the device that are provided in the foregoing embodiments of this disclosure, a plurality of multiply-accumulate arrays are disposed on the computation component, and each multiply-accumulate array may be configured to determine the multiply-accumulate result of at least one pair of input values, so that the target multiply-accumulate array for the current operation may be scheduled from the plurality of multiply-accumulate arrays based on the first tensor and the second tensor that are to be computed and the operation type. Moreover, the target control mode may be configured for the target multiply-accumulate array. Thus, the target multiply-accumulate array is controlled, according to the target control mode, to perform the operations corresponding to the operation type on the first tensor and the second tensor, to obtain a tensor computation result. According to different combinations and different control modes of different quantities of multiply-accumulate arrays in the plurality of multiply-accumulate arrays, computations for tensors of different operation types and different sizes may be supported. On one hand, universality of a tensor computation circuit may be improved, thereby avoiding designing corresponding computation circuits for computations for the tensors of different operation types and different sizes. Thus, a quantity of the multiply-accumulate arrays may be effectively reduced. On the other hand, based on the multiply-accumulate arrays, the plurality of multiply-accumulate arrays may be flexibly distributed in circuit layout, and the quantity of the multiply-accumulate arrays may be flexibly increased for different application scenarios, thereby improving layout friendliness and scalability of the tensor computation circuit. Thus, difficulty of physical implementation of the chip may be reduced.

### BRIEF DESCRIPTION OF THE DRAWINGS

FIG. 1 is an exemplary application scenario of a tensor computation apparatus according to this disclosure;
FIG. 2 is a schematic diagram of a structure of a tensor computation apparatus according to an exemplary embodiment of this disclosure;
FIG. 3 is a schematic diagram of a structure of a computation component according to an exemplary embodiment of this disclosure;
FIG. 4 is a schematic diagram of a structure of a computation component according to another exemplary embodiment of this disclosure;
FIG. 5 is a schematic diagram of a structure of a computation component according to still another exemplary embodiment of this disclosure;
FIG. 6 is a schematic diagram of a structure of a computation component according to yet another exemplary embodiment of this disclosure;
FIG. 7 is a schematic diagram of a structure of a multiply-accumulate array according to an exemplary embodiment of this disclosure;
FIG. 8 is a schematic diagram of a structure of a computation component according to still yet exemplary embodiment of this disclosure;
FIG. 9 is a schematic diagram of a structure of a computation component according to a further exemplary embodiment of this disclosure;
FIG. 10 is a schematic diagram of a structure of a multiply-accumulate unit MAC according to an exemplary embodiment of this disclosure;
FIG. 11 is a schematic diagram of a principle of a convolution operation according to an exemplary embodiment of the present disclosure;
FIG. 12 is a schematic flowchart of a tensor computation method according to an exemplary embodiment of this disclosure;
FIG. 13 is a schematic flowchart of a tensor computation method according to another exemplary embodiment of this disclosure;
FIG. 14 is a schematic flowchart of a tensor computation method according to still another exemplary embodiment of this disclosure;
FIG. 15 is a schematic flowchart of a tensor computation method according to yet another exemplary embodiment of this disclosure;
FIG. 16 is a schematic flowchart of a tensor computation method according to still yet exemplary embodiment of this disclosure; and
FIG. 17 is a diagram of a structure of an electronic device according to an embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

### Overview of this disclosure

In a process of implementing this disclosure, the inventor finds that in application scenarios such as intelligent driving and intelligent cockpit, neural network technologies are usually required to implement environmental perception, positioning, planning and control, and various functions inside the cockpit. The neural network technologies typically involve a large amount of tensor computations such as convolution operations and matrix multiplication, which are generally implemented based on multiply-accumulate arrays in a chip. However, with increasing demand for computing power of the chip, a quantity of the multiply-accumulate arrays in the chip is growing exponentially, posing significant challenges for a design and physical implementation of the chip.

### Exemplary overview

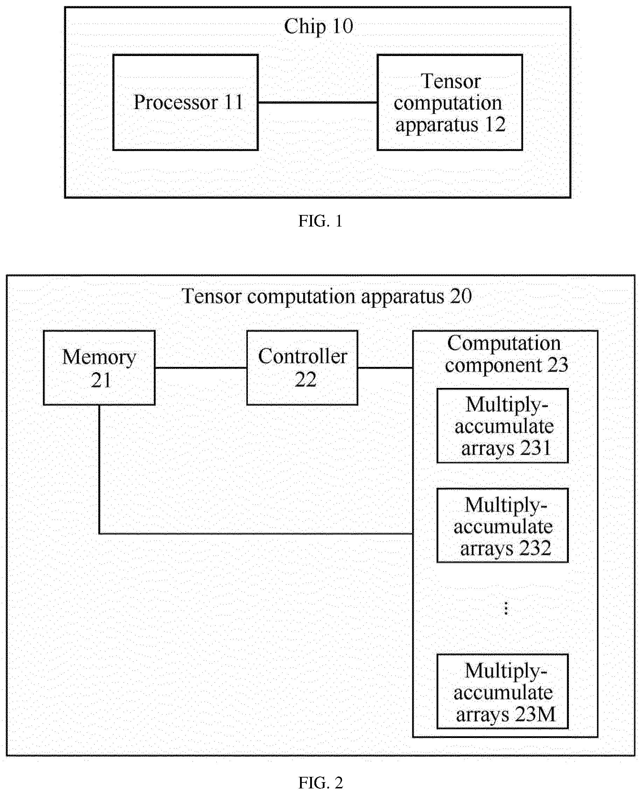

FIG. 1 is an exemplary application scenario of a tensor computation apparatus according to this disclosure. As shown in FIG. 1, a chip 10 in this disclosure is, for example but not limited to, an intelligent driving chip or an intelligent cockpit chip. The chip 10 may include one or more processors 11 and a tensor computation apparatus 12. The processor 11 may be configured to run applications for intelligent driving, intelligent cockpit, and other functions. During a process of running these applications, for a task that requires accelerated computation by using the tensor computation apparatus, the processor 11 may issue a computation task to the tensor computation apparatus 12. The computation task may include information about a first tensor and a second tensor that are to be computed, an operation type, and other task information. The information about the first tensor may include, for example, a size and a storage address of the first tensor. The information about the second tensor may include, for example, a size and a storage address of the second tensor. The tensor computation apparatus 12 in this embodiment of this disclosure may obtain the computation task, and load the first tensor and the second tensor into an internal memory according to the computation task. Alternatively, the processor 11 writes the first tensor and the second tensor into the memory in advance. Further, based on the first tensor, the second tensor, and the operation type, the tensor computation apparatus 12 may schedule one or more multiply-accumulate arrays in the tensor computation apparatus 12 to control a corresponding multiply-accumulate array to complete computations for the first tensor and the second tensor, so as to obtain a tensor computation result; and store the tensor computation result into a designated storage space.

The processor 11 includes, for example but is not limited to, one or more of a central processing unit (CPU), a neural network processing unit (NPU), and a graphic processing unit (GPU). In practical application, interaction between the processor 11 and the tensor computation apparatus 12 is not limited to the foregoing implementation mode. Merely exemplary description is made herein, provided that the tensor computation apparatus 12 can be enabled to complete the corresponding computations according to computing requirements corresponding to the computation task.

The tensor computation apparatus 12 in this embodiment of this disclosure is not limited to be applied to scenarios of intelligent driving and intelligent cockpit, but may also be applied to any other scenario involving neural network computations or multiply-accumulate computations. Specific application scenarios are not limited.

### Exemplary apparatus

FIG. 2 is a schematic diagram of a structure of a tensor computation apparatus according to an exemplary embodiment of this disclosure. The tensor computation apparatus provided in this embodiment of this disclosure may be applied to an electronic device, for example, may be applied to an in-vehicle computing platform (or referred to as a vehicle-mounted terminal), or a system on chip (that is, SOC), or a neural network processor. As shown in FIG. 2, a tensor computation apparatus 20 provided in this embodiment of this disclosure may include a memory 21, a controller 22, and a computation component 23.

The memory (which may be referred to as a first memory) 21 is configured to store a first tensor and a second tensor that are to be computed.

The controller 22 is configured to read the first tensor and the second tensor from the memory 21, and determine an operation type for the first tensor and the second tensor.

The computation component 23 includes a plurality of multiply-accumulate arrays 23i (i=1, 2, ..., or M), where M is a quantity of the multiply-accumulate arrays and is a positive integer. Any one of the multiply-accumulate arrays 23i is configured to determine a multiply-accumulate result of at least one pair of input values. Any pair of the input values includes a first input value and a second input value, the first input value is a value in the first tensor, and the second input value is a value in the second tensor.

The controller 22 is further configured to: determine, based on the first tensor, the second tensor, and the operation type, a target multiply-accumulate array for a current operation from the plurality of multiply-accumulate arrays 23i of the computation component 23, and determine a target control mode corresponding to the target multiply-accumulate array; and control, according to the target control mode, the target multiply-accumulate array to perform operations corresponding to the operation type on the first tensor and the second tensor, to obtain a tensor computation result.

In some optional embodiments, the operation type may include a convolution operation, a matrix multiplication operation, a vector dot product operation, and other operations involving a multiply-accumulate (MAC) type. The first tensor and the second tensor may be tensors on which a multiply-accumulate operation needs to be performed in an operation corresponding to any operation type. For example, the first tensor and the second tensor may be a feature tensor and a convolution kernel tensor in the convolution operation, respectively. For another example, the first tensor and the second tensor may be a first matrix (or referred to as a left matrix) and a second matrix (or referred to as a right matrix) in the matrix multiplication operation, respectively. For still another example, the first tensor and the second tensor may be a first vector and a second vector for the vector dot product operation, respectively

In some optional embodiments, the first tensor and the second tensor may be written into the memory 21 by a processor that generates a computation task, or may be loaded from an external memory to the memory 21 by using the controller 22.

In some optional embodiments, the controller 22 may determine the operation type corresponding to the first tensor and the second tensor from the computation task from the processor.

In some optional embodiments, the multiply-accumulate arrays 23i are basic operation units in the embodiments of this disclosure. Each multiply-accumulate array 23i may be used alone for a computation task in an operation cycle, or a plurality of multiply-accumulate arrays may be combined for a computation task in an operation cycle, thereby facilitating adaptation to requirements of different computation tasks.

In some optional embodiments, each one multiply-accumulate array 23i may complete a multiply-accumulate operation on at least one pair of input values in one operation cycle, to obtain the multiply-accumulate result. For example, a quantity of pairs of input values on which the multiply-accumulate operation is completed in one operation cycle may be 1, 2, 3, or 4. A pair of input values may include the first input value from the first tensor and the second input value from the second tensor. For example, for the vector dot product operation, the first vector (that is, the first tensor) is [a₁, a₂, a₃, a₄], and the second vector (that is, the second tensor) is [b₁, b₂, b₃, b₄]. If the multiply-accumulate array 23i may calculate a multiply-accumulate result of four pairs of input values in one operation cycle, an operation of a₁ * b₁ + a₂ * b₂ + a₃ * b₃ + a₄ * b₄ may be completed by using one multiply-accumulate array, so as to obtain a computation result of the first vector and the second vector. On this basis, performing parallel operations by using a plurality of multiply-accumulate arrays can implement operations with various operation types corresponding to tensors of different sizes. Alternatively, operations with various operation types corresponding to tensors with larger sizes can be completed by using one or more multiply-accumulate arrays in combination with one or more operation cycles. For example, the large-scale vector dot product operation, matrix multiplication operation, and convolution operation can be completed.

In some optional embodiments, any one of the multiply-accumulate arrays can complete a multiply-accumulate operation corresponding to each set of a plurality sets of input data in one operation cycle, so as to obtain multiply-accumulate results for the various sets of input data. Each set of input data includes a plurality pairs of input values. For example, the multiply-accumulate array may complete J sets of multiply-accumulate operations, and each set of multiply-accumulate operations is, for example, a₁ * b₁ + a₂ * b₂ + a₃ * b₃ + a₄ * b₄ + ···. On this basis, more computations may be completed by using one multiply-accumulate array. For example, J sets of vector dot product operations may be completed in parallel in one operation cycle. For another example, the matrix multiplication operation or the convolution operation may be completed in fewer operation cycles. A plurality pairs of input values in each set of input data may include a plurality of first input values from the first tensor and a plurality of second input values from the second tensor. In other words, a plurality sets of data may be determined from data of the first tensor and the second tensor, and each set of data includes the plurality of first input values from the first tensor and the plurality of second input values from the second tensor. Each set of data may be used as a set of input data of the multiply-accumulate array, and a plurality sets of data may be used as a plurality sets of input data of the multiply-accumulate array. For example, if the first tensor is a first matrix and the second tensor is a second matrix, each row of data or a part of data in each row of data in the first matrix and a column of data or a part of data in a column of data in the second matrix are used as a set of input data. On this basis, according to a quantity of sets of the input data on which the multiply-accumulate operation can be completed in one operation cycle by the multiply-accumulate array, a plurality sets of input data are determined from the first matrix and the second matrix, and multiply-accumulate results corresponding to the various sets of input data are obtained through parallel operations by using the multiply-accumulate array in one operation cycle. The multiply-accumulate result corresponding to each set of input data is a multiply-accumulate result of a plurality pairs of input values in that set of input data. Optionally, there may be shared input data between the various sets of input data. For another example, for the matrix multiplication operation, if multiply-accumulate operations need to be performed on any one row of the first matrix (that is, the first tensor) and the columns of the second matrix (that is, the second tensor) respectively, a row of data or a part of data in a row of data in the first matrix may be used as shared input data corresponding to a plurality sets of operations of the multiply-accumulate array, and a column of data or a part of data in each column of data in the second matrix may be used as another piece of input data for one set operation among the plurality sets of operations of the multiply-accumulate array. Thus, multiply-accumulate operations for a row of data in the first matrix and different columns of data in the second matrix are completed in parallel by using the multiply-accumulate arrays, separately. For example, a first row of data in the first matrix is [a₁₁, a₁₂, a₁₃, a₁₄], and a j^{th} column of data in the second matrix is represented as [b₁ⱼ, b₂ⱼ, b₃ⱼ, b₄ⱼ], where j=1, 2, 3, or 4. If the multiply-accumulate array may complete operations on four sets of input data in one operation cycle, and each set of input data includes four pairs of input values, the first row of data in the first matrix may be used as a first input value in the four pairs of input values in the four sets of input data, and the j^{th} column of the second matrix may be used as a second input value in four pairs of input values in a j^{th} set of input data. In other words, the multiply-accumulate array may perform multiply-accumulate operations on the four sets of input data respectively, including: a₁₁ * b₁₁ + a₁₂ * b₂₁ + a₁₃ * b₃₁ + a₁₄ * b₄₁, a₁₁ * b₁₂ + a₁₂ * b₂₂ + a₁₃ * b₃₂ + a₁₄ * b₄₂, a₁₁ * b₁₃ + a₁₂ * b₂₃ + a₁₃ * b₃₃ + a₁₄ * b₄₃, and a₁₁ * b₁₄ + a₁₂ * b₂₄ + a₁₃ * b₃₄ + a₁₄ * b₄₄.

In some optional embodiments, the controller 22 may be implemented by using any device and/or logic circuit that has corresponding control functions or may be configured with the corresponding control functions. For example, the controller 22 may be a microcontroller unit (MCU) or another implementable device and/or logic circuit.

In some optional embodiments, the target multiply-accumulate array is a multiply-accumulate array determined from a plurality of multiply-accumulate arrays to implement operations on the first tensor and the second tensor. Optionally, there may be one or more target multiply-accumulate arrays.

In some optional embodiments, the controller 22 may determine the target multiply-accumulate array for the current operation from a plurality of multiply-accumulate arrays of the computation component 23 according to a pre-configured determining rule based on the first tensor, the second tensor, and the operation type. The determining rule may be set based on a tensor size, the operation type, and operation types supported by the multiply-accumulate arrays. The determining rule may include a rule for determining a magnitude relationship between an input data size supported by the multiply-accumulate array and the tensor size, and/or a rule for determining a current idle status of the multiply-accumulate array. For example, when sizes of the first tensor and the second tensor are relatively large, more target multiply-accumulate arrays that can participate in a current computation may be selected as possible, so as to complete a tensor computation for the first tensor and the second tensor in fewer operation cycles. Alternatively, when there are few available multiply-accumulate arrays, the tensor computation for the first tensor and the second tensor may be completed in more operation cycles.

For example, for the vector dot product operation, the first tensor and the second tensor are a vector A and a vector B, respectively. Lengths of the vector A and the vector B are both L₁, and a multiply-accumulate array may complete a multiply-accumulate operation on L₂ pairs of input values once. If L₁ is greater than L₂, a multiply-accumulate operation for some elements of the vector A and the vector B may be completed by using multiply-accumulate arrays with a quantity that is obtained by rounding up L₁/ L₂. In this case, in combination with an adder, the computation for the vector A and the vector B may be completed in fewest operation cycles. The length of the vector refers to a quantity of elements in the vector, and may also be referred to as a size or a shape of the vector. For example, if a vector [a₁, a₂, a₃, a₄] includes four elements, a length of this vector is 4. In the vector dot product operation, elements in the vectors serve as input values of the multiply-accumulate array. For example, elements in the vector A serve as the first input values, while elements in the vector B serve as the second input values.

For another example, for the matrix multiplication operation, a plurality of multiply-accumulate arrays may be used to perform multiply-accumulate operations in parallel on different rows of the first matrix and different columns of the second matrix. Specifically, in a computation manner, the first matrix consists of 6 rows and 8 columns, that is, there are 8 first input values in each row. Each multiply-accumulate array supports a multiply-accumulate operation for four pairs of input values in a single operation cycle. The first input values in each row of the first matrix may be computed in parallel with the second matrix by using two multiply-accumulate arrays. To be specific, in one operation cycle, a multiply-accumulate array is used to calculate multiply-accumulate results of first 4 first input values in a row of the first matrix and corresponding second input values in each column of the second matrix; and another multiply-accumulate array is used to calculate multiply-accumulate results of last 4 first input values in this row (that is, other input values except the first 4 input values in this row) and corresponding second input values in each column of the second matrix. On this basis, the first matrix consisting of 6 rows and 8 columns and the second matrix may be computed in parallel by using 12 multiply-accumulate arrays, to obtain a tensor computation result for the first matrix and the second matrix. In another computation manner, the first input values in each row of the first matrix may be calculated in two operation cycles by using one multiply-accumulate array. To be specific, multiply-accumulate results of first 4 first input values in a row of the first matrix and corresponding second input values in each column of the second matrix are calculated in one operation cycle; and multiply-accumulate results of last 4 first input values in this row (that is, other input values except the first 4 input values in this row) of the first matrix and corresponding second input values in each column of the second matrix are calculated by using the multiply-accumulate array in another operation cycle.

For still another example, for the convolution operation, the first tensor is represented as a feature tensor, and the second tensor is represented as a convolution kernel. A plurality of multiply-accumulate arrays may be used to perform multiply-accumulate operations on the feature tensor and different convolution kernels, or to perform multiply-accumulate operations on feature data at different HW positions in the feature tensor and different weight data in the convolution kernel. In HW, H represents a height and W represents a width. For example, if the feature tensor is a tensor with a size of H₁*W₁*C₁, H₁ represents a height of the feature tensor, W₁ represents a width of the feature tensor, C₁ represents a depth of the feature tensor, and the HW position in the feature tensor refers to a position where H=i and W=j (also referred to as a HW=ij position or a HiWj position) in the feature tensor, where i=1, 2, ..., or H₁, and j=1, 2, ..., or W₁. A feature at each HW position is a C₁-dimensional vector, that is, including C₁ feature values along a depth direction at the HW position. Different HW positions in the feature tensor refer to positions where at least one of i and j is different. For example, features at a HW=11 position and a HW=12 position in the feature tensor are two C₁-dimensional vectors in the feature tensor.

The convolution operation, the matrix multiplication operation, and the vector dot product operation described above are decomposed into multiply-accumulate operations that can be executed by the multiply-accumulate arrays, so that multiply-accumulate arrays of relatively small scale are used to perform different types of operations on tensors of different sizes. In this way, universality of the multiply-accumulate array can be effectively improved, thereby avoiding designing corresponding tensor computation circuits for tensors of different sizes and computation tasks of different operation types. This can effectively reduce the quantity of the multiply-accumulate arrays, thereby reducing difficulty of physical implementation of the chip.

In some optional embodiments, the target control mode corresponding to the target multiply-accumulate array refers to control logic of controlling the target multiply-accumulate array to complete the operations for the first tensor and the second tensor. The target control mode may include timing of one or more control operations. The control operations include, for example but are not limited to, an operation of controlling the target multiply-accumulate arrays to input data, an operation of controlling the target multiply-accumulate arrays to perform computations, and an operation of controlling output of a computation result. For example, the operation of controlling the target multiply-accumulate arrays to input data may include: inputting of a quantity of input data that is input to the target multiply-accumulate array each time, taking sequentially at least a part of data of the first tensor and/or the second tensor data as a sequence of the input data, etc.. For example, the operation of controlling the target multiply-accumulate arrays to perform computations may include providing clock signals and/or other signals driving the target multiply-accumulate arrays to perform computations to the target multiply-accumulate arrays. For example, the operation of controlling output of a computation result may include: an operation of reading the computation result from a register storing the computation result and storing the computation result into a designated storage space; or an operation of controlling the register storing the computation result to shift to output the computation result, and inputting the computation result to a designated downstream circuit.

In some optional embodiments, after the target control mode corresponding to the target multiply-accumulate array is determined, the target multiply-accumulate array may be controlled according to the target control mode to perform operations corresponding to the operation type on the first tensor and the second tensor, to obtain the tensor computation result. For example, corresponding operations are performed according to timing of the control operations in the target control mode, and the tensor computation for the first tensor and the second tensor is completed by inputting data to the target multiply-accumulate array, controlling computation of the target multiply-accumulate array, determining the tensor computation result based on the multiply-accumulate result of the target multiply-accumulate array, and storing the tensor computation result into the designated storage space.

According to the tensor computation apparatus provided in the embodiments, a plurality of multiply-accumulate arrays are designed for the computation component, and each multiply-accumulate array may be configured to determine the multiply-accumulate result of at least one pair of input values, so that the target multiply-accumulate array for the current operation is scheduled from the plurality of multiply-accumulate arrays based on the first tensor and the second tensor that are to be computed and the corresponding operation type. Moreover, the corresponding target control mode is configured for the target multiply-accumulate array. Thus, the target multiply-accumulate array is controlled, according to the target control mode, to perform the operations corresponding to the operation type on the first tensor and the second tensor, to obtain the tensor computation result. According to different combinations and different control modes corresponding to different quantities of multiply-accumulate arrays in the plurality of multiply-accumulate arrays, computations for tensors of different operation types and different sizes may be supported. According to the tensor computation apparatus provided in this disclosure, on one hand, universality of the tensor computation circuit may be improved, thereby avoiding designing corresponding computation circuits for computations for the tensors of different operation types and different sizes. Thus, a quantity of the multiply-accumulate arrays may be effectively reduced. On the other hand, based on the multiply-accumulate arrays, the plurality of multiply-accumulate arrays may be flexibly distributed in circuit layout, and the quantity of the multiply-accumulate arrays may be flexibly increased for different application scenarios, thereby effectively improving layout friendliness and scalability of the tensor computation circuit. Thus, difficulty of physical implementation of the chip may be reduced. In other words, for the tensor computation apparatus including a large quantity of multiply-accumulate arrays, because a plurality of multiply-accumulate arrays can be flexibly distributed in an integrated circuit, difficulty of physical implementation of the integrated circuit can be effectively reduced.

In some optional embodiments, on the basis of the embodiment shown in FIG. 2, the controller 22 is configured to:
determine quantity information about the target multiply-accumulate array corresponding to the current operation of the tensor computation apparatus based on first size information of the first tensor; determine the target multiply-accumulate array from the plurality of multiply-accumulate arrays 23i based on the quantity information; and determine the target control mode corresponding to the target multiply-accumulate array based on the first tensor, the second tensor, and the operation type.

The first size information of the first tensor indicates sizes of the dimensions of the first tensor. For example, if the first tensor is a one-dimensional vector, the first size information is a length of the vector; if the first tensor is a two-dimensional matrix, the first size information includes a height and a width of the matrix; and if the first tensor is a three-dimensional tensor, the first size information includes a height, a width, and a depth of the three-dimensional tensor. The quantity information about the target multiply-accumulate array refers to a quantity of multiply-accumulate arrays that are determined to participate in the current operation. It may be understood that the quantity of the target multiply-accumulate arrays is less than or equal to a total quantity of the multiply-accumulate arrays.

In some optional embodiments, the quantity information about the target multiply-accumulate array corresponding to the current operation may be determined based on the first size information of the first tensor and input data information about operations supported by each multiply-accumulate array. The input data information about the operations supported by the multiply-accumulate array includes a quantity of pairs of input values of the operations supported by the multiply-accumulate array. For example, for a case where the first tensor is the first matrix, a ratio of input data that can be completed by a multiply-accumulate array in one operation cycle to a row of data in the first matrix may be determined based on a width (that is, a quantity of columns) of the first matrix in combination with the input data information of the multiply-accumulate array, and the quantity of the target multiply-accumulate arrays may be determined based on this ratio and a height (that is, a quantity of rows) of the first matrix. For example, for a matrix corresponding to the first matrix consisting of 6 rows and 8 columns, that is, there are 8 values (or referred to as elements or element values) in each row of data in the matrix, if there are 4 pairs of input values supported by the multiply-accumulate array, a quantity of required multiply-accumulate arrays is 8/4*6=12. In this case, the operation type of performing a multiply-accumulate on each row of data in the first matrix and each column of data in the second matrix may be implemented in a plurality of operation cycles. For example, the first input value is a set of elements in a row of the first matrix. In a plurality of operation cycles, second input values corresponding to the first input value in columns of the second matrix are respectively input to the multiply-accumulate arrays to implement operations on one row of the first matrix and a plurality of columns of the second matrix. For example, if the second matrix is a matrix with 8 rows and F (where F is a positive integer) columns, regarding an operation type that a multiply-accumulate needs to be performed on each row of data in the 6 rows of data in the first matrix and F columns of data in the second matrix, in F operation cycles, second input values corresponding to the first input values in columns of the second matrix may be respectively input to the multiply-accumulate arrays to obtain corresponding multiply-accumulate results for the multiply-accumulate arrays in the F operation cycles. Each operation cycle corresponds to a column of the second matrix, and then the tensor computation result for the first matrix and the second matrix is obtained based on the multiply-accumulate results in the F operation cycles. It should be noted that only an exemplary implementation of determining the quantity information about the target multiply-accumulate array is described herein. In practical application, manners of determining the target multiply-accumulate array are not limited to this example. Optionally, the quantity information about the target multiply-accumulate array may be determined based on size information of the second tensor and the input data information of the multiply-accumulate array. For example, the quantity information about the target multiply-accumulate array is determined based on a ratio of a height of the second matrix to a quantity of pairs of the input values of the multiply-accumulate array and a width of the second matrix. For another example, the quantity information about the target multiply-accumulate array may be comprehensively determined by combining the first size information of the first tensor, the size information of the second tensor (which may be referred to as second size information), and the input data information of the multiply-accumulate array. For still another example, a ratio of an amount of operations completed by a multiply-accumulate array in one operation cycle to an overall amount of operations performed for the first tensor and the second tensor is determined based on the first size information of the first tensor and the second size information of the second tensor, and then the quantity information about the target multiply-accumulate array is determined based on this ratio. A specific manner of determining the quantity information about the target multiply-accumulate array is not limited.

In some optional embodiments, the input data information may include a quantity of sets of input data on which operations are supported by the multiply-accumulate array and a quantity of pairs of input values included in each set. For a case where the first tensor is a one-dimensional vector, a ratio of an amount of operations that can be completed by a multiply-accumulate array in one operation cycle to an overall amount of operations for performing the vector dot product operation on the first tensor and the second tensor may be determined based on a vector length of the one-dimensional vector, a quantity of sets of input data supported by the multiply-accumulate array, and a quantity of pairs of input values included in each set. The quantity information about the target multiply-accumulate array is determined based on this ratio. For example, if the vector length of the one-dimensional vector is 100, 4 sets of input data are supported by the multiply-accumulate array, and 5 pairs of input values are included in each set of input data, the quantity of the target multiply-accumulate arrays is 100/(4*5)=5.

For a case where the first tensor is a two-dimensional vector, in an implementation, a quantity of rows that can be computed in parallel by the multiply-accumulate array in one operation cycle and a completion proportion of each of the rows may be determined based on a height and a width of the first matrix in combination with a quantity of sets of input data supported by the multiply-accumulate array and a quantity of pairs of input values included in each set. In other words, the quantity of sets of input data supported by the multiply-accumulate array may be used as the quantity of rows that can be computed in parallel by the multiply-accumulate array, and the quantity of pairs of input values in each set may be used as the completion proportion of each row in the multiply-accumulate array. For example, the first matrix is a matrix with 6 rows and 8 columns, 3 sets of input data are supported by the multiply-accumulate array, and each set includes 4 pairs of input values. In this case, it is indicated that 3 rows can be computed in parallel by each multiply-accumulate array in one operation cycle and the completion proportion of each row is 4/8 (that is, 1/2). In other words, in one operation cycle, a multiply-accumulate array may complete a multiply-accumulate operation on 4 input values (that is, the first input values) in each row of data among 3 rows of data in the first matrix and 4 second input values in a column of data in the second matrix. In this case, the quantity of the required multiply-accumulate arrays may be (6/3)*(8/4)=4. 6/3 represents a ratio of a quantity of rows in the first matrix to a quantity of rows that can be computed in parallel by each multiply-accumulate array. In other words, there are 3 rows that can be computed in parallel by each multiply-accumulate array in one operation cycle, and there are 6 rows in the first matrix. Therefore, 6/3 multiply-accumulate arrays are required to support parallel computation of 6 rows. 8/4 represents a ratio of the quantity of columns (that is, a quantity of first input values included in each row of data) in the first matrix to a quantity of first input values in each row supported by the multiply-accumulate array in one operation cycle. In other words, each multiply-accumulate array can only complete multiply-accumulate operations for 4 first input values in each row of data among 3 rows of data in the first matrix and 4 corresponding second input values in the second matrix in one operation cycle. In this case, 8/4 (that is, 2) multiply-accumulate arrays are required to complete multiply-accumulate operations for 3 rows of data in the first matrix and various columns of data in the second matrix in parallel. Specifically, a multiply-accumulate array is used to calculate multiply-accumulate results of first 4 first input values in each row of data among 3 rows of data in the first matrix and corresponding second input values in each column in the second matrix; and another multiply-accumulate array is used to calculate multiply-accumulate results of last 4 first input values in each row of data among the 3 rows of data (that is, other input values except the first 4 input values in this row) and corresponding second input values in each column of the second matrix. In another implementation, the quantity of the required multiply-accumulate arrays may be determined based on the height of the first matrix (that is, the quantity of rows in the first matrix) and the quantity of sets of input data supported by the multiply-accumulate array (that is, the quantity of rows that can be computed in parallel). Further, for a case where a completing proportion for each row in the first matrix by the multiply-accumulate array in one operation cycle is less than 1, complete computation for each row in the first matrix may be implemented by increasing operation cycles. For example, the first matrix is a matrix with 6 rows and 8 columns, the multiply-accumulate array supports 3 sets of input data, and each set includes 4 pairs of input values. Based on the quantity of the rows in the first matrix and the quantity of sets of input data supported by the multiply-accumulate array, it is determined that the quantity of the required multiply-accumulate arrays is 6/3=2. The implementation manner of computing each row in the first matrix by increasing the operation cycles may be: first, calculating a multiply-accumulate result of first 4 first input values in each row of the first matrix and second input values corresponding to the first input values in each column of the second matrix by using 2 determined target multiply-accumulate arrays; subsequently, in the added operation cycles, using the 2 target multiply-accumulate arrays to calculate a multiply-accumulate result of last 4 first input values in each row (that is, other input values except the first 4 input values in this row of data) of the first matrix and second input values corresponding to the first input values in each column of the second matrix; and then, adding the multiply-accumulate result corresponding to the first 4 first input values in each row of the first matrix to the multiply-accumulate result corresponding to the last 4 first input values by using a post-processing unit such as the adder, to obtain a corresponding multiply-accumulate result for each row of the first matrix. It should be noted that only some exemplary implementations of determining the quantity information about the target multiply-accumulate array are described herein. In practical application, specific manners of determining the target multiply-accumulate array are not limited to the foregoing manners. For example, the quantity information about the target multiply-accumulate array may be comprehensively determined by combining the first size information of the first tensor, the second size information of the second tensor, and the input data information of the multiply-accumulate array. For another example, the quantity information about the target multiply-accumulate array may be determined based on the second size information of the second tensor and the input data information of the multiply-accumulate array. Similar to vector-based and matrix-based operation modes, for operations based on a three-dimensional tensor, the quantity information about the target multiply-accumulate array may be determined based on size information about the three-dimensional tensor and information about the input data supported by the multiply-accumulate array. Details are not described herein.

In some optional embodiments, the quantity information about the target multiply-accumulate array may be comprehensively determined based on the first size information of the first tensor in combination with the idle status of the multiply-accumulate array. In other words, the quantity of the target multiply-accumulate arrays is constrained by a quantity of idle multiply-accumulate arrays.

In some optional embodiments, after the target multiply-accumulate array is determined, the operations for the first tensor and the second tensor may be decomposed into one or more operation cycles based on the first tensor, the second tensor, and the operation type in combination with the target multiply-accumulate arrays, so as to perform an operation based on the multiply-accumulate array. Based on the decomposition result, control operations and timing of the entire operation are determined to obtain the target control mode of the target multiply-accumulate array. The control operations include, for example but are not limited to, an operation of inputting data to the target multiply-accumulate array, an operation of controlling the target multiply-accumulate array to perform computations, and an operation of reading the multiply-accumulate result of the target multiply-accumulate array. Optionally, the control operations may also include an operation of fusing multiply-accumulate results of all multiply-accumulate arrays in all operation cycles, to obtain a final tensor computation result. For example, if a total quantity of pairs of input values on which a multiply-accumulate operation needs to be performed in the first tensor and the second tensor is greater than a quantity of pairs of input values that can be supported by a multiply-accumulate array in one operation cycle, the multiply-accumulate operation corresponding to that set of input values may be decomposed into a plurality of operation cycles and/or may be performed by a plurality of multiply-accumulate arrays. Multiply-accumulate results calculated after the decomposition need to be added to obtain multiply-accumulate results corresponding to that set of input values in the first tensor and the second tensor. For example, in a scenario of performing an operation by using the tensor computation apparatus provided in this disclosure, if the first tensor is a first matrix and the second tensor is a second matrix, a multiply-accumulate result needs to be calculated for each row of the first matrix and each column of the second matrix. If there are 8 elements in each row of the first matrix, that is, it is needed to calculate a multiply-accumulate result of 8 first input values and 8 second input values in each column of the second matrix, and there are 4 pairs of input values that can be supported by a multiply-accumulate array in one operation cycle, a multiply-accumulate operation for each row of the first matrix and each column of the second matrix may be decomposed into a plurality of operation cycles and/or may be performed by a plurality of multiply-accumulate arrays, to obtain a multiply-accumulate result of the first 4 first input values in each row of the first matrix and the first 4 second input values in each column of the second matrix, and a multiply-accumulate result of the last 4 first input values in each row of the first matrix and the last 4 second input values in each column of the second matrix. Taking that the first matrix is a matrix with 6 rows and 8 columns, the second matrix is a matrix with 8 rows and F (F is a positive integer) columns, and a multiply-accumulate array can support four pairs of input values in one operation cycle as an example, if it is determined that there is one target multiply-accumulate array, the multiply-accumulate operation for the first matrix and the second matrix requires the target multiply-accumulate array to perform the multiply-accumulate operation in 6*F*(8/4) operation cycles. To be specific, one row of data in the first matrix and one column of data in the second matrix require 8/4 operation cycles, and multiply-accumulate operations need to be performed on each row of data among 6 rows of data in the first matrix and F columns of data in the second matrix, respectively. Therefore, 6*F times of 8/4 operation cycles are required. If it is determined that there are 2 (such as 8/4) target multiply-accumulate arrays, the multiply-accumulate operation for the first matrix and the second matrix requires the 2 target multiply-accumulate arrays to perform the multiply-accumulate operation in parallel in 6*F operation cycles. If it is determined that there are 12 (such as 6*8/4) target multiply-accumulate arrays, the multiply-accumulate operation for the first matrix and the second matrix requires the 12 target multiply-accumulate arrays to perform the multiply-accumulate operation in parallel in F operation cycles. Only some exemplary decomposition modes are described herein, and practical applications are not limited to the decomposition modes in the foregoing examples. Subsequently, the multiply-accumulate result of the first 4 first input values and the first 4 second input values that is calculated after the decomposition may be added to the multiply-accumulate result of the last 4 first input values and the last 4 second input values, to obtain a multiply-accumulate result of the 8 first input values in each row of the first matrix and the 8 second input values in each column of the second matrix. Optionally, the control operations may also include an operation of writing the tensor computation result into the specified storage space. For example, when a computation task including storage address information of the tensor computation result is issued by the processor, after obtaining the tensor computation result, the tensor computation apparatus 20 writes the tensor computation result into the storage space corresponding to the storage address information, so that the processor can read the tensor computation result and then continue subsequent processing.

In the embodiments of this disclosure, the quantity information about the target multiply-accumulate array corresponding to the current operation can be determined in combination with the size information of the first tensor and the input data information about the operations supported by the multiply-accumulate array. Thus, collaborative operations for the first tensor and the second tensor can be completed by using this quantity of multiply-accumulate arrays, thereby improving efficiency of tensor computation. In this way, the target control mode of the target multiply-accumulate array is determined based on specific situations of the first tensor, the second tensor, and the operation type, so as to accurately control the target multiply-accumulate array to perform corresponding computations or operations, thereby ensuring accuracy and validity of the tensor computation result.

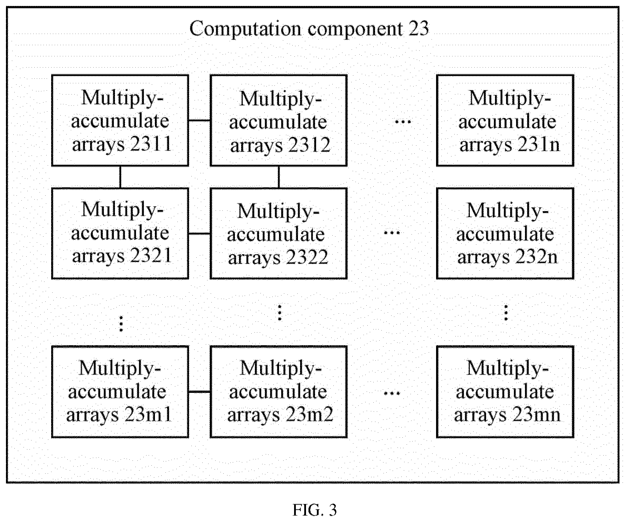

FIG. 3 is a schematic diagram of a structure of a computation component according to an exemplary embodiment of this disclosure.

In some optional embodiments, as shown in FIG. 3, the plurality of multiply-accumulate arrays include multiply-accumulate arrays arranged in m rows and n columns.

The first size information of the first tensor includes a first height, a first width, and a first depth of the first tensor.

The controller 22 is specifically configured to:
in response to that the first size information of the first tensor meets a preset size condition, determine, based on the first height, the first width, and the first depth, a target quantity of rows and a target quantity of columns of target multiply-accumulate arrays corresponding to the current operation, and take the target quantity of rows and the target quantity of columns as the quantity information; or in response to that the first height in the first size information does not meet the preset size condition, determine the quantity m of the rows of the multiply-accumulate arrays as the target quantity of rows of the target multiply-accumulate arrays, determine the first width as the target quantity of columns of the target multiply-accumulate arrays, and determine the target quantity of rows and the target quantity of columns as the quantity information; or in response to that the first width in the first size information does not meet the preset size condition, determine the quantity n of the columns of the multiply-accumulate arrays as the target quantity of columns of the target multiply-accumulate arrays, determine the first height as the target quantity of rows of the target multiply-accumulate arrays, and determine the target quantity of rows and the target quantity of columns as the quantity information. The quantity information refers to the quantity information corresponding to the target multiply-accumulate array participating in the current operation, and may include the target quantity of rows and the target quantity of columns.

Both m and n are positive integers, where m is greater than 1 and/or n is greater than 1. The first height, the first width, and the first depth respectively are magnitudes of three dimension, that is, height, width, and depth, of the first tensor. When the first tensor is a one-dimensional vector, the first size information thereof may be expressed as 1*1*C. To be specific, both the first height and the first width are 1, and the first depth is C. When the first tensor is a two-dimensional matrix, the first size information thereof may be expressed as 1*h*w, where h represents a height of the two-dimensional matrix and w represents a width of the two-dimensional matrix. Optionally, to adapt to a specified data structure, the two-dimensional matrix may be represented as a three-dimensional data structure of 1*h*w, where the first height in the first size information is 1, the first width is h, and the first depth is w. When the first tensor is a three-dimensional vector, the first size information thereof may be expressed as H*W*C. To be specific, the first height is H, the first width is W, and the first depth is C. The preset size condition is a condition set according to constraints of m and n. For example, the preset size condition may be that the first height of the first tensor is less than the quantity m of the rows of the multiply-accumulate arrays, and the first width of the first tensor is less than the quantity n of the columns of the multiply-accumulate arrays.

In some optional embodiments, when the first size information meets the preset size condition, it is indicated that there is no need to use all the multiply-accumulate arrays. To be specific, based on the first height, the first width, and the first depth of the first tensor, regions of the multiply-accumulate arrays corresponding to some rows and/or some columns may be determined from the m rows and n columns multiply-accumulate array to serve as regions be to computed. Therefore, the target quantity of rows and the target quantity of columns of the target multiply-accumulate array may be determined based on the first height, the first width, and the first depth.

In some optional embodiments, for tensors of different dimensions, different modes may be adopted to determine the target quantity of rows and the target quantity of columns. For example, when the first tensor is a one-dimensional vector or a tensor with a size of 1*1*C, a first height 1 may be determined as the target quantity of rows. The target quantity of columns may be determined based on the first width, the first depth, and the information about the input data supported by each multiply-accumulate array. For example, if the information about the input data supported by the multiply-accumulate array includes 5 pairs of input values, then the method for determining the target quantity of columns may be 1*C/5. Rounding up may be performed if a calculation result of 1*C/5 is not an integer, and an integer obtained through the rounding up may be used as the target quantity of columns. Alternatively, the first width is determined as the target quantity of columns. If the first depth is greater than the quantity of pairs of the input values of the multiply-accumulate array, computation of the entire vector may be completed by extending (that is, increasing) operation cycles. Optionally, when the information about the input data includes a plurality sets of input data, the target quantity of columns may be further determined by combining the quantity of sets of the input data.

In some optional embodiments, for a two-dimensional matrix of h*w or a first tensor with a size of 1*h*w, the first width h may be determined as the target quantity of rows, and the target quantity of columns may be determined based on the first depth w, and the information about the input data of each multiply-accumulate array. For example, if the information about the input data of the multiply-accumulate array includes 5 pairs of input values, the target quantity of columns may be w*1/5. Alternatively, if the information about the input data of the multiply-accumulate array includes 4 sets of input data, and each set includes 5 pairs of input values, the target quantity of columns may be w*1/(5*4). For the second tensor, the size information thereof may be expressed as 1*w*f. In other words, considering a data structure of a two-dimensional matrix, the quantity of rows in the second matrix is same as the quantity w of columns in the first matrix. For each row in the first matrix, multiply-accumulate operations need to be performed respectively with the columns in the second matrix. This may be implemented in a plurality of operation cycles. Alternatively, the target quantity of columns may be further determined by combining the first depth of the first tensor and the size information of the second tensor. Alternatively, the target quantity of rows and the target quantity of columns may be comprehensively determined based on the first height, the first width, and the first depth of the first tensor, and a second height, a second width, and a second depth of the second tensor. This is not specifically limited.

In some optional embodiments, when the first tensor is a two-dimensional matrix, it is not limited to determining the first height of the first tensor as the target quantity of rows. For example, the second width of the second tensor (that is, a quantity of columns in the second tensor) may also be determined as the target quantity of rows, so that a multiply-accumulate operation may be performed on each column of the second tensor and each row of the first tensor.

In some optional embodiments, when the first tensor is a three-dimensional tensor, the first height may be determined as the target quantity of rows, and the first width may be determined as the target quantity of columns. Alternatively, the first height may be determined as the target quantity of rows, and the target quantity of columns may be determined in combination with the first width, the first depth, and the quantity of pairs of the input values of the multiply-accumulate array. Alternatively, the target quantity of columns may be determined in combination with the first width, the first depth, the quantity of sets of input data of the multiply-accumulate array, and a quantity of pairs of input values in each set. This may be specifically set according to actual requirements.

In some optional embodiments, if the first height in the first size information does not meet the preset size condition while the first width meets the preset size condition, for example, if the first height is greater than or equal to m while the first width is less than n, it indicates that the first height exceeds m rows, m is determined as the target quantity of rows, and the first width is determined as the target quantity of columns. Subsequently, the first height of the first tensor is decomposed into a plurality of sub-heights, that is, the first tensor is decomposed into sub-tensors with a plurality of sub-heights by rows, so as to perform operations by using the target multiply-accumulate arrays. A multiply-accumulate calculation for each sub-tensor may be completed in at least one operation cycle, and a quantity of operation cycles required by each sub-tensor may be determined based on a depth of the sub-tensor (that is, the first depth of the first tensor) and the information about the input data supported by each multiply-accumulate array. For example, if the depth of the sub-tensor exceeds a quantity of pairs of input values supported by each multiply-accumulate array, it is also needed to split a depth dimension of the sub-tensor into a plurality of sub-depths, so as to complete an overall multiply-accumulate operation in the depth dimension by increasing operation cycles. For example, if the depth of the sub-tensor is 8 and each multiply-accumulate array supports a multiply-accumulate operation for 4 pairs of input values in one operation cycle, it is needed to split the depth dimension into two sub-depths, so as to complete a multiply-accumulate operation for the two sub-depths in two operation cycles. Optionally, a certain operation cycle is required to complete a fusion operation for multiply-accumulate results of all sub-depths. Therefore, each sub-tensor requires at least one operation cycle to complete the operation, and a quantity of operation cycles required by a plurality of sub-tensors is determined based on the quantity of operation cycles required by each sub-tensor. For example, if the first height is d times of m and each sub-tensor requires e operation cycles, d*e operation cycles are required to complete the overall multiply-accumulate operation.

In some optional embodiments, if the first width in the first size information does not meet the preset size condition while the first height meets the preset size condition, for example, if the first height is less than m while the first width is greater than or equal to n, that is, the first width exceeds a total quantity of columns in the multiply-accumulate array, the first width is used as the target quantity of columns and the first height is used as the target quantity of rows. The first width of the first tensor is decomposed into a plurality of sub-widths, and the first tensor is decomposed into sub-tensors with a plurality of sub-widths by columns (that is, in a width direction), so that the overall multiply-accumulate operation is completed by extending a quantity of operation cycles of the target multiply-accumulate array. Similar to the manner of decomposing the first tensor into sub-tensors with a plurality of sub-heights by rows in the foregoing embodiments, the first tensor is decomposed into sub-tensors with a plurality of sub-widths by columns. The multiply-accumulate calculation may be completed for each sub-tensor in at least one operation cycle, and the quantity of operation cycles required by each sub-tensor is determined based on the depth of the sub-tensor and the information about the input data supported by each multiply-accumulate array. The quantity of operation cycles required by a plurality of sub-tensors is determined based on the quantity of operation cycles required by each sub-tensor. Details are not described again.

In some optional embodiments, when both the one-dimensional vector and the two-dimensional matrix are expressed as the first tensor of a three-dimensional data structure, that is, the one-dimensional vector may be expressed as a three-dimensional data structure of 1*1*C and the two-dimensional matrix may be expressed as a three-dimensional data structure of 1*h*w, when the preset size condition is met, an actual type for the first tensor may also be determined by combining the first height and the first width of the first tensor. The actual type 1 indicates that the first tensor is a one-dimensional vector. The target quantity of rows and the target quantity of columns may be determined according to a manner of determining the target multiply-accumulate arrays corresponding to the pre-configured one-dimensional vector and two-dimensional matrix. For example, when the first tensor is a one-dimensional vector, the target quantity of rows is not limited to 1, provided that the total quantity of the target multiply-accumulate arrays can meet computational requirements. For example, a total of 6 multiply-accumulate arrays are required, and the target quantity of rows and the target quantity of columns may be any one of 1 row and 6 columns, 6 rows and 1 column, 2 rows and 3 columns, and 3 rows and 2 columns.

In the embodiments of this disclosure, the target quantity of rows and the target quantity of columns of the target multiply-accumulate array are determined by combining the first size information and constraints of the preset size condition, so as to avoid a situation where the determined target quantity of rows and target quantity of columns exceed a total quantity of rows and/or a total quantity of columns of the multiply-accumulate array, thereby ensuring validity of the target quantity of rows and the target quantity of columns of the target multiply-accumulate array.

In some optional embodiments, the controller 22 is specifically configured to:

in response to that the first size information does not meet a preset size condition, determine the first tensor as at least one first sub-tensor based on the quantity information about the target multiply-accumulate array; and determine the target control mode corresponding to the target multiply-accumulate array based on the first sub-tensor, the second tensor, and the operation type.

When the first size information does not meet the preset size condition, to ensure that the target multiply-accumulate array can complete accurate operations for the first tensor and the second tensor, the first tensor may be determined as a plurality of sub-tensors (that is, first sub-tensors) based on the quantity information about the target multiply-accumulate array. Further, control operations and timing corresponding to the target multiply-accumulate array may be determined based on the first sub-tensors, the second tensor, and the operation type, so as to obtain the target control mode. Specifically, a corresponding target multiply-accumulate array may be determined for data in each first sub-tensor based on the first sub-tensors, the second tensor, and the operation type in combination with the quantity information about the target multiply-accumulate array; input timing when the data in each first sub-tensor that corresponds to the target multiply-accumulate array is used as input data (first input data) of the target multiply-accumulate array may be determined based on the information about the input data supported by each multiply-accumulate array; input timing of second input data in the second tensor that corresponds to the first input data in each target multiply-accumulate array may be determined based on the input timing of the first input data; computational timing of the target multiply-accumulate arrays may be determined by combining the input timing corresponding to the first input data and the second input data, respectively; and the target control mode may be determined based on the control operations and corresponding operation timing. For example, at a timepoint t₀ after the target multiply-accumulate arrays enter a working status, at least one pair of input values corresponding to the timepoint t₀ (that is, at least one pair of input values at timing corresponding to the timepoint t₀) is input to the target multiply-accumulate arrays according to the input timing of the data, respectively. In other words, at least one pair of input values corresponding to the timepoint t₀ is input to each target multiply-accumulate array according to the input timing of the data. A quantity of pairs of input values included in one or more pairs of input values is a quantity of pairs of input values that can be supported by the target multiply-accumulate array. Each pair of input values includes the first input value from the first tensor and the second input value from the second tensor. According to the computational timing of the target multiply-accumulate arrays, clock signals are transmitted to the target multiply-accumulate arrays at a timepoint t₁, so that the target multiply-accumulate arrays perform multiply-accumulate calculations on the first input value and the second input value that are input at the timepoint t₀, to obtain a corresponding multiply-accumulate result at the timepoint t₁. The multiply-accumulate result corresponding to the timepoint t₁ is cached at a timepoint t₂, and at least one pair of input values corresponding to the timepoint t₂ is input to the target multiply-accumulate arrays according to the input timing of the data. According to the computational timing of the target multiply-accumulate arrays, clock signals are transmitted to the target multiply-accumulate arrays at a timepoint t₃, so that the target multiply-accumulate arrays perform multiply-accumulate calculations on the first input value and the second input value input that are input at the timepoint t₂, to obtain a corresponding multiply-accumulate result at the timepoint t₃. Others are deduced by analogy. The control operations are performed according to certain timing, to control the target multiply-accumulate arrays to work together to complete the operations for the first tensor and the second tensor.

In the embodiments of this disclosure, if the first tensor that does not meet the preset size condition, the first tensor may be split into a plurality of first sub-tensors, and then computations for the plurality of sub-tensors can be completed by using the target multiply-accumulate arrays through timing control. In this way, computations of tensors with larger sizes can be completed by using multiply-accumulate arrays of relatively small scale, which further improves utilization and universality of the multiply-accumulate arrays and effectively reduces the quantity of the multiply-accumulate arrays, thereby facilitating physical implementation of the tensor computation apparatus or a chip integrated with the multiply-accumulate arrays.

In some optional embodiments, on the basis of any one of the foregoing embodiments, the controller 22 is specifically configured to:
determine, based on the first tensor, the second tensor, the operation type, and status information of the multiply-accumulate arrays 23i in the computation component 23, the target multiply-accumulate array for the current operation from the multiply-accumulate arrays, among the plurality of multiply-accumulate arrays, of which the status information indicates an idle status.

The status information of the multiply-accumulate array 23i indicates whether the multiply-accumulate array 23i is in an idle status. The status information of each multiply-accumulate array 23i may be maintained in a real-time manner during a scheduling process of the multiply-accumulate arrays. For example, the status information of multiply-accumulate array may be recorded in a real-time manner by using a status register, or may be determined in other monitoring modes, which is not specifically limited.

In some optional embodiments, each multiply-accumulate array may compute separately, and any quantity of multiply-accumulate arrays may be combined for computation, so that the multiply-accumulate arrays can adapt to different computation tasks, and can support simultaneous execution of a plurality of computation tasks. In this case, when it is needed to perform operations on the first tensor and the second tensor, some of the multiply-accumulate arrays may be participating in other computation tasks. The target multiply-accumulate array used for the current operation may be comprehensively determined by combining the first tensor, the second tensor, the operation type, and the status information of the multiply-accumulate arrays 23i, which can effectively ensure that the target multiply-accumulate array participates in the computation in a timely manner, thereby avoiding a situation of waiting for completion of other computation tasks before participating in the computation.

In some optional embodiments, a quantity and/or arrangement information of multiply-accumulate arrays with the status information indicating the idle status may be determined first, where the arrangement information refers to a quantity of rows and a quantity of columns of the multiply-accumulate arrays in the idle status; a correlation between the first size information of the first tensor and the quantity and/or the arrangement information of the multiply-accumulate arrays in the idle status is determined by combining the quantity and/or the arrangement information of the multiply-accumulate arrays in the idle status; and the target multiply-accumulate array is determined according to the manner described in the foregoing embodiments. Details are not described again.

In the embodiments of this disclosure, the target multiply-accumulate array in the idle status is determined further in combination with the status information of the multiply-accumulate array. Thus, availability of the target multiply-accumulate array may be ensured, so that computations can be performed in a timely manner to avoid a situation of waiting for the target multiply-accumulate array to execute other computation tasks, thereby ensuring real-time performance of a current computation task.

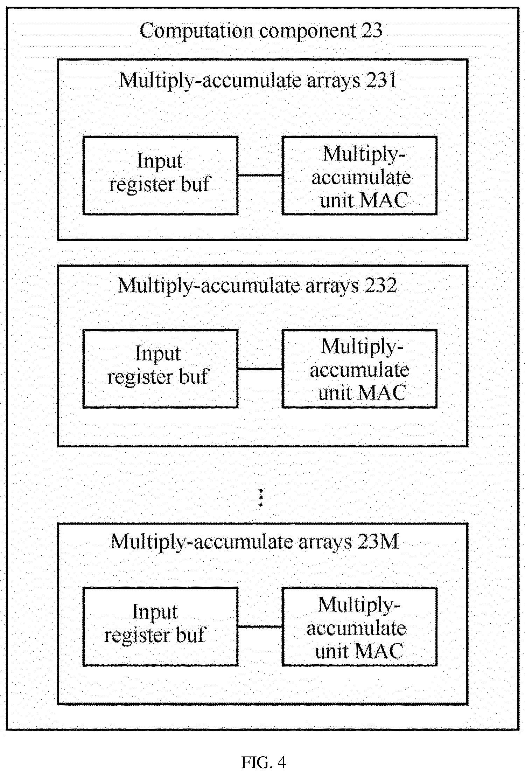

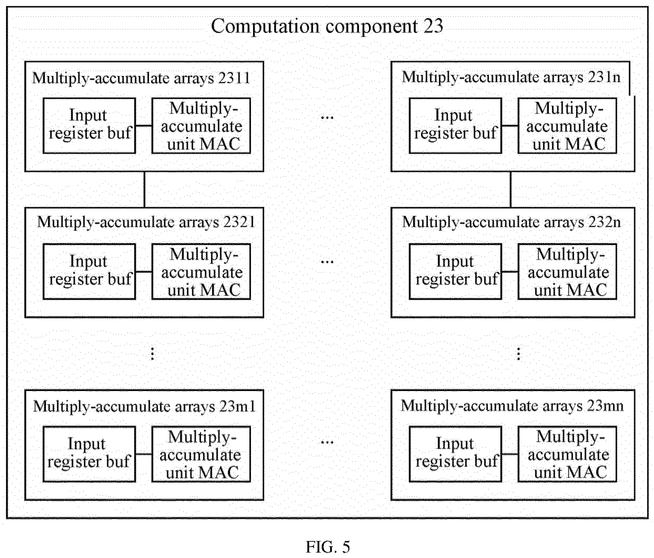

FIG. 4 is a schematic diagram of a structure of a computation component according to another exemplary embodiment of this disclosure. FIG. 5 is a schematic diagram of a structure of a computation component according to still another exemplary embodiment of this disclosure.

In some optional embodiments, on the basis of any one of the foregoing embodiments, as shown in FIG. 4 and FIG. 5, any one of the multiply-accumulate arrays 23i includes an input register buf and a multiply-accumulate unit MAC. Referring to FIG. 4, i=1, 2, ..., or M, where M is the quantity of the multiply-accumulate arrays and is a positive integer. Alternatively, as shown in FIG. 5, i=11, 12, ..., In, 21, 22, ..., 2n, ..., or mn, where m is the quantity of rows in the multiply-accumulate array, n is the quantity of columns in the multiply-accumulate array, and both m and n are positive integers.

The input register buf is configured to store at least the first input value.

The controller 23 is specifically configured to:
write first element values in the first tensor into the input register buf in the corresponding target multiply-accumulate array according to first control timing in the target control mode, to serve as the first input value corresponding to a target multiply-accumulate unit in the target multiply-accumulate array; determine a second input value corresponding to each first input value in the second tensor based on second tensor configuration information in the target control mode; control the target multiply-accumulate unit to perform a multiply-accumulate operation on the first input value in the input register and the corresponding second input value, to obtain a multiply-accumulate operation result; and determine the tensor computation result based on multiply-accumulate operation results of target multiply-accumulate units in the target multiply-accumulate arrays.

The input register buf may be any type of register, such as a general-purpose register or a shift register. The input register buf may store at least the first input value (or referred to as the first input data in the input data). A quantity of storable first input values may be set according to requirements of the multiply-accumulate unit MAC. For example, if the multiply-accumulate unit MAC can complete a multiply-accumulate operation for 5 pairs of input values once, the input register can store at least 5 first input values. The second input value corresponding to each first input value is used as a weight value in the calculation process, and is controlled to be input by the controller 22.

In some optional embodiments, the input register buf is electrically connected to the multiply-accumulate unit MAC, to provide the first input value for the multiply-accumulate unit MAC.

In some optional embodiments, the input register buf is configured to store at least one pair of input values, which includes a first input value and a second input value.

In some optional embodiments, the first control timing in the target control mode is control timing for writing the first input value to the input register buf of the target multiply-accumulate array. For example, on a first clock edge (that is, in the operation cycle), the first input value corresponding to the current operation cycle is written into the input registers buf corresponding to the target multiply-accumulate arrays according to the first control timing. After one or more computations are completed based on the first input value, a first input value corresponding to a next operation cycle is written to the input register buf according to the first control timing for a next computation. Similarly, the computation process of the target multiply-accumulate array is controlled according to the first control timing according to the target control mode and timing of other control operations. Multiply-accumulate operations may be required for each set of first input values and a plurality sets of second input values, separately. Therefore, after the first input value is written into the input register buf, relevant operations corresponding to a next set of first input values may be executed after that first input value has participated in one or more computations. The multiply-accumulate unit in the target multiply-accumulate array is referred to as the target multiply-accumulate unit. The second tensor configuration information in the target control mode includes the second input value corresponding to the first input value that is determined from the second tensor according to input timing of the first input value, and corresponding timing. Therefore, the second input value corresponding to each first input value may be determined based on the second tensor configuration information. Thus, the target multiply-accumulate unit may be controlled to perform a multiply-accumulate operation on the first input value in the input register buf and the corresponding second input value, to obtain the multiply-accumulate operation result (or referred to as the multiply-accumulate result). According to the control operations and the control timing in the target control mode, the target multiply-accumulate array is controlled to complete each operation to obtain a multiply-accumulate result for each operation.

In some optional embodiments, the target multiply-accumulate array can cache the multiply-accumulate result each time completing a multiply-accumulate operation, to determine the final tensor computation result.

In some optional embodiments, the controller 22 determines the tensor computation result based on the multiply-accumulate operation results of the target multiply-accumulate units in the target multiply-accumulate arrays. For example, the controller 22 may perform post processing on the multiply-accumulate operation results of the target multiply-accumulate units to obtain the tensor computation result. The post processing may include an addition operation, and data combination performed according to a data structure of the tensor computation result. The addition operation is used to decompose a multiply-accumulate operation with a larger size into a plurality of multiply-accumulate operations with smaller sizes for addition, to obtain a multiply-accumulate operation result with a larger size. For example, both the first tensor and the second tensor are vectors. In the process of performing the multiply-accumulate calculation by using the target multiply-accumulate array, a large-scale vector dot product operation for the first tensor and the second tensor is decomposed into a plurality of small-scale sub-operations for the first tensor and the second tensor. Multiply-accumulate results of the sub-operations need to be added to obtain an operation result of the large-scale vector dot product operation for the first tensor and the second tensor.

In some optional embodiments, the computation component 23 may also include an addition operation unit. When multiply-accumulate results of a plurality of target multiply-accumulate arrays or multiply-accumulate results of a plurality of operation cycles further need to be added, an addition operation may be performed by using the addition operation unit to obtain a multiply-accumulate result meeting requirements. For example, if a vector dot product operation with a long vector length is decomposed into operations for the plurality of target multiply-accumulate arrays or operations for the plurality of operation cycles, it is needed to add the multiply-accumulate results of the plurality of target multiply-accumulate arrays or the multiply-accumulate results of the plurality of operation cycles to obtain a final vector dot product operation result. In this case, an addition operation may be performed on the multiply-accumulate results by using the addition operation unit. In other words, the controller 22 may control the addition operation unit to perform post processing on the multiply-accumulate results, to determine the tensor computation result. The target control mode may include control operations of the post processing and corresponding operation timing.

In the embodiments of this disclosure, the first input value is stored by using the input register buf and is provided to the multiply-accumulate unit MAC, so that the first input value can participate in at least one calculation of the multiply-accumulate unit. Thus, the first input value is written to the input register according to the first control timing in the target control mode, to provide a valid first input value for the multiply-accumulate unit of the target multiply-accumulate array. In combination with the second tensor configuration information, the corresponding second input value is provided for the multiply-accumulate unit, so that the target multiply-accumulate unit can perform a multiply-accumulate operation on the first input value and the second input value to determine the tensor computation result, thereby implementing accurate control of the target multiply-accumulate unit and ensuring validity of the tensor computation result.

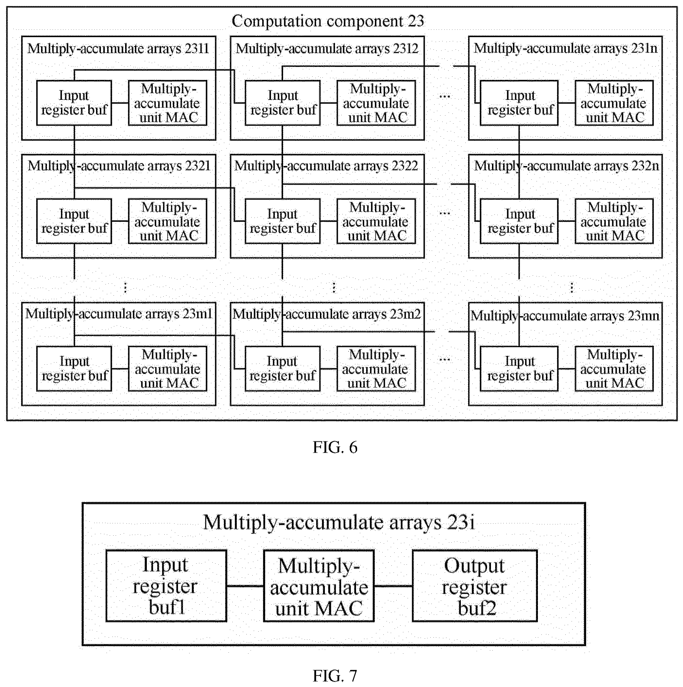

FIG. 6 is a schematic diagram of a structure of a computation component according to yet another exemplary embodiment of this disclosure.

In some optional embodiments, on the basis of any one of the foregoing embodiments, as shown in FIG. 6, there are a plurality of target multiply-accumulate arrays; and any one of the multiply-accumulate arrays includes an input register buf and a multiply-accumulate unit MAC.

The input register buf is configured to store at least the first input value, and is a shift register buf. The input registers buf of the multiply-accumulate arrays 23i are electrically connected according to a preset arrangement mode.

The controller 22 is specifically configured to:
write first element values in the first tensor sequentially into the input registers buf corresponding to first designed positions in the target multiply-accumulate arrays according to the first control timing , to control the input registers buf to shift along a first direction, and shift the first element values to the input registers buf corresponding to the first element values; or write all the first element values sequentially into the input registers buf corresponding to second designed positions in the target multiply-accumulate arrays according to the first control timing, to control the input registers buf to shift along a second direction, and shift the first element values to the input registers buf corresponding to the first element values.

The shift register may include at least one of a left shift register, a right shift register, and a bidirectional shift register, which may be set according to actual requirements. The preset arrangement mode may be determined based on an arrangement mode of the plurality of multiply-accumulate arrays. For example, if the arrangement mode of the plurality of multiply-accumulate arrays is m rows and n columns, a preset arrangement mode of the input registers may include electrical connection of the input registers in each row of multiply-accumulate arrays, or electrical connection of the input registers in each column of multiply-accumulate arrays, or electrical connection of the input registers in each row and electrical connection of the input registers in each column. A specific connection mode is not limited.

In some optional embodiments, the first designated position may be an edge row in the target multiply-accumulate array, such as a first row or a last row. The second designated position may be an edge column in the target multiply-accumulate array, such as a first column or a last column. The first direction and the second direction are shiftable directions of the input register buf. For example, the first direction is a column direction (or a vertical direction) from the first row to the last row or a column direction from the last row to the first row, and the second direction is a row direction (or a horizontal direction) from the first column to the last column or a row direction from the last column to the first column. The specific first designed position, first direction, second designed position, and second direction may be determined based on movable directions of the input registers. Taking a row of target multiply-accumulate arrays as an example, if the input register buf is a left shift register, the second designated position is a last column (that is, a rightmost column) of target multiply-accumulate arrays, and the second direction is a direction from right to left along the row direction. For a column of target multiply-accumulate arrays, if the left shift register indicates a shift from top to bottom along the column direction, the first designed position is a first row of target multiply-accumulate arrays, and the first direction is a direction from top to bottom along the column direction. For example, if the target multiply-accumulate arrays include all multiply-accumulate arrays in FIG. 6, the rightmost column is a n^{th} column (including multiply-accumulate arrays 231n-23mn), and the first row of target multiply-accumulate arrays are a first row of multiply-accumulate arrays 2311-231n in FIG. 6. For example, in a first cycle (also referred to as a first clock signal or the first operation cycle), a first input value corresponding to a m^{th} row is first written into the input registers in the first row. In a second cycle, the input register is shifted downward, and the first input value in the input registers in the first row is shifted to a second row. Meanwhile, in the second cycle, a first input value in a (m-l)^{th} row is written into the input registers in the first row. Others may be deduced by analogy. By shifting, the first input values corresponding to all rows of input registers are written into the corresponding input registers. Subsequently, the multiply-accumulate units MAC of the target multiply-accumulate arrays may be controlled to calculate to obtain multiply-accumulate results of the multiply-accumulate units of the target multiply-accumulate arrays.

In some optional embodiments, the input registers in each row may be cyclically or non-cyclically shifted. Cyclic shift indicates that a first input register in each row is electrically connected to a last register in that row, so that during movement, the input value in the first input register may be shifted to the last input register, and/or, the input value in the last input register may be shifted to the first input register.

In some optional embodiments, the multiply-accumulate results of the multiply-accumulate units MAC may be cached into the corresponding register, and the controller 22 may read the multiply-accumulate result of the multiply-accumulate units from the register. This register may be a register inside the computation component 23 or a register outside the computation component, which is not specifically limited.

In some optional embodiments, data may be reused during the process of injection of the first input value through shifting. For example, the second element value of the second tensor may be written as the second input value into the target multiply-accumulate array. For a case where a multiply-accumulate operation needs to be performed on the first input value in a set and second input values in a plurality of sets, after being written into input registers buf at the first designated position (such as the first row), the first input value is first used as a first input value of multiply-accumulate units at the first designated position to be computed with the second input value in the first set, and then is shifted to a next row to be used as a first input value of target multiply-accumulate arrays in the next row, to be computed with the second input value in the second set in the next row. Others may be deduced by analogy, and data reuse is achieved to reduce a quantity of data transfers.

In the embodiments of this disclosure, data input to input registers in various rows or columns is implemented by using the shift registers, which can effectively reduce wiring complexity between the input registers and the external. Moreover, the shift registers also facilitate reuse of the input values, thereby effectively reducing the quantity of data transfers.

FIG. 7 is a schematic diagram of a structure of a multiply-accumulate array according to an exemplary embodiment of this disclosure.

In some optional embodiments, on the basis of any one of the foregoing embodiments, as shown in FIG. 7, any one of the multiply-accumulate arrays 23i includes an input register buf1, a multiply-accumulate unit MAC, and an output register buf2.

The input register buf1 is configured to store the first input value in the at least one pair of input values.

The multiply-accumulate unit MAC is configured to perform a multiply-accumulate calculation on the at least one pair of input values to obtain the multiply-accumulate result of the at least one pair of input values.

The output register buf2 is configured to store the multiply-accumulate result obtained by the multiply-accumulate unit.

For the input register buf1 and the multiply add-unit MAC, reference may be made to the input register buf in the foregoing embodiments, and details are not described herein. The output register buf2 may be any register, for example, may include at least one of a general-purpose register and a shift register. The shift register may include at least one of a left shift register, a right shift register, and a bidirectional shift register.

In some optional embodiments, the multiply-accumulate unit MAC may cache the multiply-accumulate operation result to the output register buf2 each time the multiply-accumulate operation is completed. The controller 22 may read the multiply-accumulate operation result from the output register buf2, and then determine the tensor computation result based on the multiply-accumulate operation results of the target multiply-accumulate arrays in various operation cycles.

In the embodiments of this disclosure, the multiply-accumulate result of the multiply-accumulate unit is cached by using the output register, which helps the controller to read the multiply-accumulate result, so as to provide accurate and valid data reference for determining the tensor computation result.

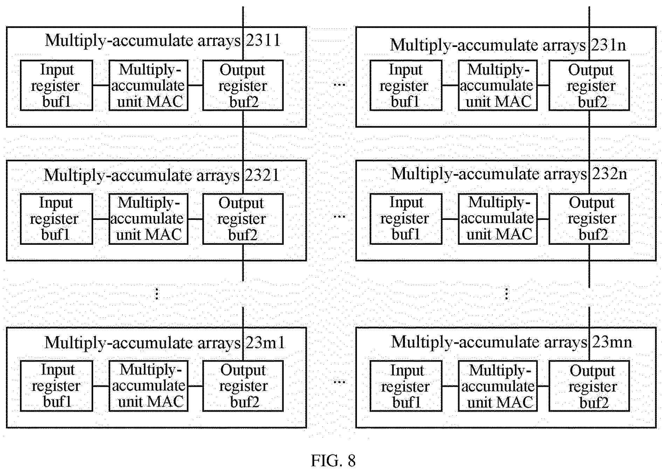

FIG. 8 is a schematic diagram of a structure of a computation component according to still yet exemplary embodiment of this disclosure.

In some optional embodiments, on the basis of any one of the foregoing embodiments, as shown in FIG. 8, the output register buf2 is a shift register; and there are a plurality of target multiply-accumulate arrays.

The output registers buf2 of the multiply-accumulate arrays are electrically connected.

The controller 22 is further configured to control the output register buf2 to shift for output in a preset direction after the multiply-accumulate result obtained by the multiply-accumulate unit MAC in the target multiply-accumulate array is written into the output register buf2.

The output registers buf2 of the multiply-accumulate arrays may be electrically connected by rows and/or columns, so as to shift the multiply-accumulate results in each row or column for output. That the output registers buf2 in each column are electrically connected is used as an example in FIG. 8, and practical applications are not limited to this connection mode.

In some optional embodiments, for a case where a quantity of the target multiply-accumulate arrays is less than or equal to the total quantity of the multiply-accumulate arrays, shifting and output may be implemented in the preset direction of the output register buf2. For example, the target multiply-accumulate arrays include some of the multiply-accumulate arrays in 2 rows and 3 columns in FIG. 8, such as multiply-accumulate arrays 2311-2313 and multiply-accumulate arrays 2321-2323. After one operation is completed, shifting and output may be implemented by using the output register buf2.

In the embodiments of this disclosure, the shift register is used as the output register, so that the multiply-accumulate result of the multiply-accumulate unit can be output through shifting, which further reduces wiring complexity and thus reducing difficulty of physical implementation.

In some optional embodiments, on the basis of any one of the foregoing embodiments, the operation type is a convolution operation.

The plurality of multiply-accumulate arrays 23i include multiply-accumulate arrays arranged in m rows and n columns. Any one of the multiply-accumulate arrays 23i includes an input register buf and a multiply-accumulate unit MAC, and the input registers buf are electrically connected according to a preset arrangement mode, as shown in FIG. 6.

The target multiply-accumulate arrays include multiply-accumulate arrays arranged in s rows and t columns, that is, the multiply-accumulate arrays in s rows and t columns are determined from the plurality of multiply-accumulate arrays of the computation component to serve as the target multiply-accumulate arrays, where s is less than or equal to m, and t is less than or equal to n.

The controller 22 is specifically configured to:
iteratively perform: control, according to second control timing in the target control mode, the multiply-accumulate unit in the target multiply-accumulate array to perform a multiply-accumulate operation on a current first input value in the input register buf and a corresponding current second input value in the second tensor, to obtain a first multiply-accumulate result of a current cycle (that is, the current operation cycle); and control, according to a shift direction corresponding to the current cycle in the target control mode, the input register buf in the target multiply-accumulate array to shift, so as to shift the first input value in one input register buf to another input register buf; and in response to that a number of shifts of the input register meets a termination condition, determine the tensor computation result based on the first multiply-accumulate result obtained from an iteration.

For the convolution operation, the first tensor may be a feature tensor, and the second tensor may be a convolution kernel. The second tensor may include one or more convolution kernels, each of which is represented as a three-dimensional tensor. The second control timing in the target control mode is timing for controlling calculations of the multiply-accumulate units in the target multiply-accumulate arrays. The current first input value and the current second input value are initially a first batch of data in the first tensor and the second tensor for multiply-accumulate operations. The initial first input value and/or second input value may be input to the input registers through a shift function of the input register. Further, the foregoing processes of multiply-accumulate operation, shift, multiply-accumulate operation and shift are iteratively executed. The shift direction corresponding to the current cycle may be either shifting downward along the column, shifting upward along the column, shifting leftward along the row, or shifting rightward along the row, which is specifically determined based on the second control timing. The termination condition is a threshold for a number of shifts, which may be obtained in the target control mode.

In some optional embodiments, the input registers buf1 of the multiply-accumulate arrays are electrically connected according to the preset arrangement mode; and the output registers buf2 of the multiply-accumulate arrays are electrically connected. The input registers buf1 are shift registers, and the output registers buf2 are also shift registers. During the calculation process, the input value may be reused through shifting of the input register buf1. The multiply-accumulate result obtained by the multiply-accumulate unit is written into the output register buf2, and then is output through shifting.

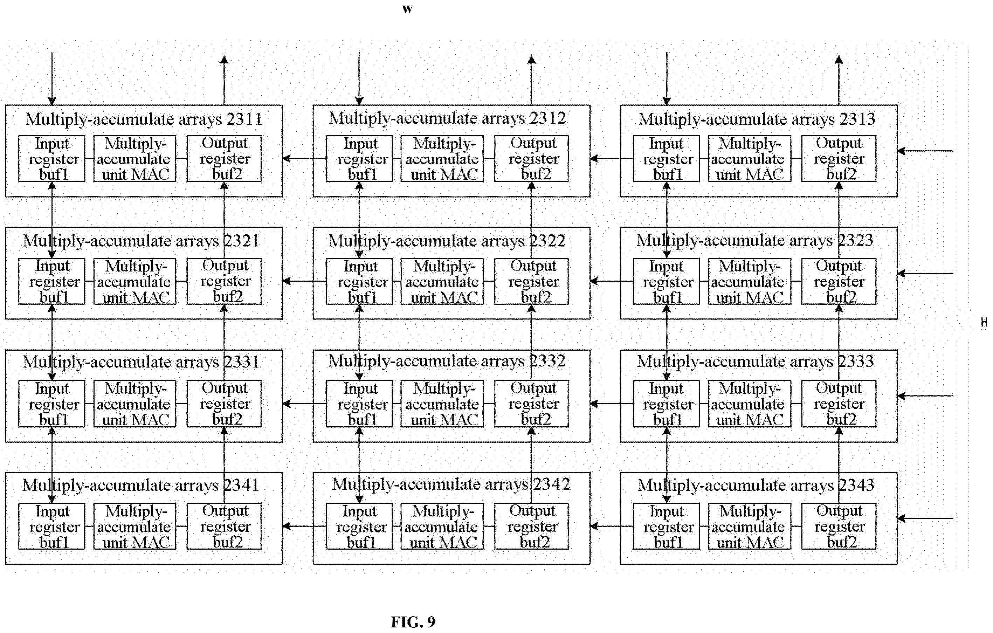

FIG. 9 is a schematic diagram of a structure of a computation component according to a further exemplary embodiment of this disclosure. As shown in FIG. 9, taking 4 rows and 3 columns of multiply-accumulate arrays as an example, the input registers buf1 in each column are electrically connected, and the input registers buf1 in each row are also electrically connected. Taking a multiply-accumulate array 2312 as an example, an arrow pointing from the input register buf1 to a multiply-accumulate array 2311 indicates an electrical connection to the input register buf1 of the multiply-accumulate array 2311, and shifting may be performed in a direction of the arrow (that is, in a leftward direction along the row direction). An arrow pointing from a rightmost side to a multiply-accumulate array 23j3 (j=1, 2, 3, or 4) indicates a write end of the first input value, which may correspond to a height (H) direction of the first tensor to be computed. In other words, input values at a plurality of height positions (such as height positions of h1, h2, h3, and h4) in the height direction of the first tensor may be written from a right side into input registers buf1 in a rightmost column. A plurality of first input values or a plurality sets of first input values may be correspondingly written at each height position, where each set includes a plurality of first input values. An input arrow on an upper side of a multiply-accumulate array 231i represents a write end of the first input value, which may correspond to a width (W) direction of the first tensor. In other words, input values at a plurality of width positions (such as width positions of w1, w2, and w3) in the width direction of the first tensor may be written from top into input registers buf1 in a first row. In practical application, if the input register buf1 is a right shift register, an input end in the height direction may also be in the first column (such as a left side in FIG. 9), and an input end in the width direction may also be in a last row (such as a lower side in FIG. 9). After being written through the write end, the first input value may be shifted to a next input register through shifting in the row direction or the column direction, and another batch of first input values may be written through the write end. Others may be deduced by analogy, so that all multiply-accumulate arrays are filled. Alternatively, according to the control timing, new input data may be input while calculating, and control operations and corresponding operation timing may be specifically determined based on operational properties of the convolution operation.

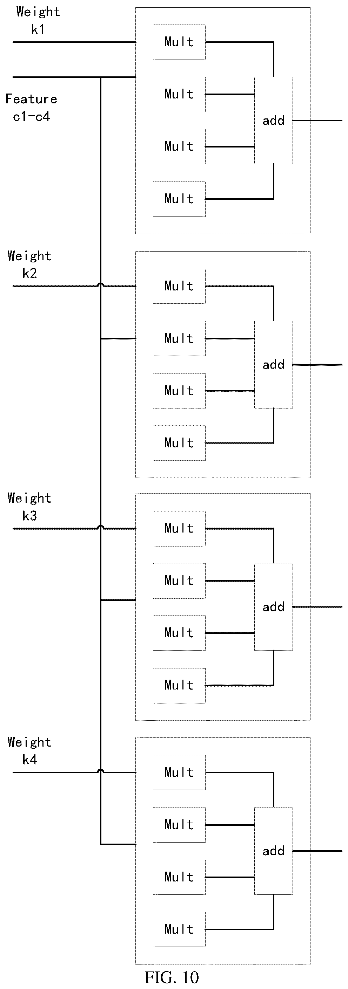

In some optional embodiments, FIG. 10 is a schematic diagram of a structure of a multiply-accumulate unit MAC according to an exemplary embodiment of this disclosure. As shown in FIG. 10, each multiply-accumulate array may perform multiply-accumulate operations on 4 sets of input data in parallel in one operation cycle, where each set of input data may include 4 pairs of input values. For the convolution operation, Weight ki represents a weight value in an i^{th} convolution kernel (each convolution kernel inputs 4 weight values in each cycle to serve as the second input values), and Feature cl-c4 represent 4 values in a depth direction of the feature tensor (serving as the first input values). The multiply-accumulate unit MAC includes 4 sets of multiply-accumulate subunits, and each set of multiply-accumulate subunits includes 4 multipliers and 1 adder. The 4 multipliers are configured to perform multiplication operations on 4 pairs of input values to obtain 4 products. The adder is configured to perform an addition operation on the 4 products to obtain a multiply-accumulate result for the 4 pairs of input values. A multiply-accumulate unit may obtain multiply-accumulate results corresponding to the 4 sets of input data, separately. It should be noted that FIG. 10 is merely an exemplary structural diagram of the multiply-accumulate array. In practical application, a quantity of the multiply-accumulate subunits and a quantity of pairs of the input values in each multiply-accumulate subunit may be set according to actual requirements, which are not limited to those shown in FIG. 10.

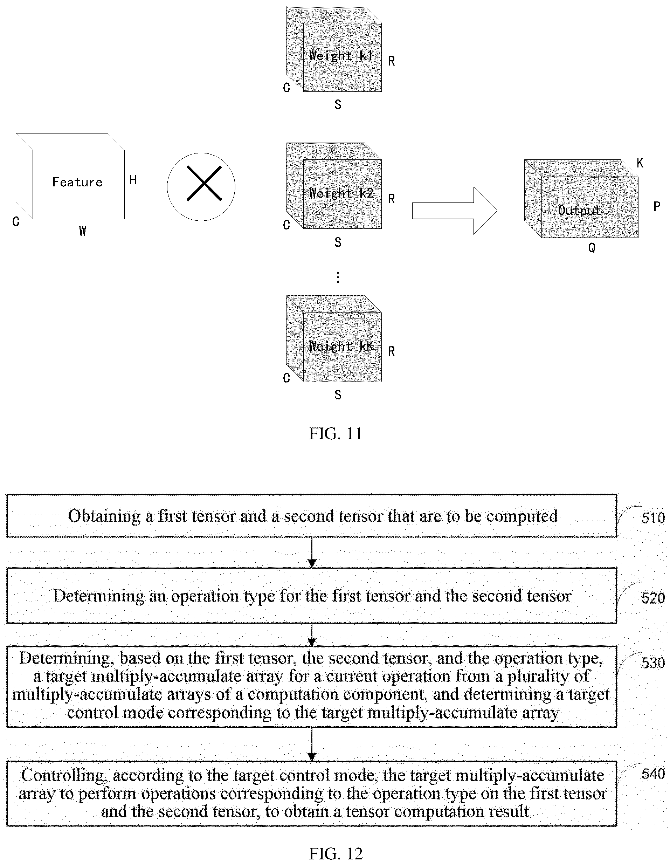

For example, FIG. 11 is a schematic diagram of a principle of a convolution operation according to an exemplary embodiment of the present disclosure. As shown in FIG. 11, a Feature (that is, the feature tensor) of H*W*C represents the first tensor, and Weight kp of R*S*C represents a p^{th} convolution kernel, where p=1, 2, ..., or K, and K represents a quantity of convolution kernels. A convolution result (output) of P*Q*K is obtained through a convolution operation. The tensor computation apparatus 20 in the embodiments of this disclosure is used. For example, the computation component 23 is shown in FIG. 9, and multiply-accumulate units are shown in FIG. 10. In a case where the 4 rows and 3 columns of multiply-accumulate arrays shown in FIG. 9 are used as the target multiply-accumulate arrays, input data may be injected from the rightmost side shown in FIG. 9. Input data at 4 height positions, such as input data at the height positions of h1, h2, h3, and h4, may be corresponded each time. Each height position corresponds to a row of target multiply-accumulate arrays. The 4 sets of first input values of each multiply-accumulate array use 4 values cl-c4 along a depth (C) direction at a same width position. Various columns of target multiply-accumulate arrays correspond to different width positions (such as w1, w2, and w3) of the Feature, and 4 sets of second input values correspond to weight values of 4 different convolution kernels. Weight values at different positions of different convolution kernels are used as the second input values of the target multiply-accumulate arrays, and cl-c4 at different height positions and width positions (hiwj) of the Feature are used as the first input values to be input to the input registers. Multiply-accumulate operations need to be performed on cl-c4 at each hiwj (i=1, 2, ..., or H, and j=1, 2, ..., or W) position of the Feature and c1-c4 values at risj (i=1, 2, ..., or R, and j=1, 2, ..., or S) positions of each convolution kernel. Therefore, each batch of first input values are shifted by using the input registers, so that multiply-accumulate operations are performed on the first input values and the weight values at different positions. For example, the second input value in the multiply-accumulate array 2311 includes c1-c4 at a r1s1 position of each of 4 convolution kernels; the second input value in the multiply-accumulate array 2312 includes cl-c4 at a r1s2 position of each of the 4 convolution kernels; the second input value in multiply-accumulate array 2321 includes cl-c4 at a r2s1 position of each of the 4 convolution kernels; .... ; cl-c4 at positions h1wl, h2w1, h3wl, and h4wl of the Feature are first written into the input registers in the rightmost column, and then are shifted leftward to be input to the first column. During each leftward shifting, c1-c4 at positions h1w2, h2w2, h3w2, and h4w2 may be written to the rightmost column, and may be injected to the second column through leftward shifting. Others may be deduced by analogy, to input the corresponding first input values to the input registers of the target multiply-accumulate arrays. Further, the target multiply-accumulate arrays are controlled to perform multiply-accumulate operations on the current first input value and the current second input value, to obtain the first multiply-accumulate result of the current cycle. Subsequently, according to a shift direction corresponding to the current cycle (such as shifting leftward or downward), the first input values in the input registers are shifted to input registers of another target multiply-accumulate array, so that multiply-accumulate operations are performed on the first input values and second input values of another target multiply-accumulate array. The first input values is reused through iterative operations of operation→shift→operation→shift. A specific number of shifts and a shift direction for each shift are determined based on properties of the convolution operation, and details are not described. It should be noted that only an exemplary implementation is described above, and practical applications are not limited to the foregoing implementation. For example, the second input value may also be shifted by using the input register to be reused. To be specific, the first input value in each multiply-accumulate array remains unchanged while the second input value is shifted, so that multiply-accumulate operations are performed on the first input value and different second input values. This may be specifically set according to actual requirements, and details are not described. Optionally, the first input data may also be input from top of the target multiply-accumulate array shown in FIG. 9, and may be shifted downward through the input register buf1 to be input into the corresponding input register. A specific principle is similar to that for inputting from the right side. For example, c1-c4 at the positions h1w1, h1w2, and h1w3 are first written into the input registers in the first row, and then are shifted downward and are written into h2w1, h2w2, and h2w3. Others may be obtained by analogy, and details are not described herein. Operations of a next batch of input data, such as a multiply-accumulate operation of c5-c8 at each position, may be performed after operations of a batch of first input data are completed. A calculation process is consistent with the foregoing process, and details are not described herein.

In some optional embodiments, for the convolution operation, the first tensor is a feature tensor, and may include N H*W*C feature tensors, that is, a batch size of the feature tensor. The target multiply-accumulate array and the corresponding target control mode may be determined further in combination with N.

In some optional embodiments, for each multiply-accumulate array, as shown in FIG. 10, the Features cl-c4 are broadcasted to the multiply-accumulate subunits, so that the multiply-accumulate subunits share a set of first input data. In practical application, it is not limited to broadcasting the first input data, but the Feature may also be exchanged with the Weight. For example, c1-c4 of the Weight are broadcasted to different batches of Features. In other words, when there are a plurality of H*W*C Features, a set of second input data may be broadcasted to the multiply-accumulate subunits, so that multiply-accumulate operations may be performed on this set of second input data and the first input data of different Features, which is not specifically limited.

In some optional embodiments, each column of the multiply-accumulate arrays arranged in m rows and n columns may be used as a group. In other words, the plurality of multiply-accumulate arrays include n groups, and each group includes m multiply-accumulate arrays.

It should be noted that the structural diagram of the computation component 23 shown in the embodiments of this disclosure is only a logical structural representation. In terms of physical layout, the multiply-accumulate arrays may be distributed at any position in the circuit and may be electrically connected according to a logical relationship, without being limited to be arranged in a centralized manner.

According to the embodiments of this disclosure, reuse of the input data is achieved through the shift function of the input register, which reduces data transfers and improves computational efficiency. In addition, a RS dimension of the Weight and higher dimensional convolutions can be expanded in time, so that universal convolution processing for any size can be implemented, and all dimensions can be configured. Therefore, the structure of the computation component in the embodiments of this disclosure has good scalability and flexibility, and also supports setting any dimension in N*H*W*C*K to 1, where N represents a batch dimension of the Feature and K represents a quantity dimension of the convolution kernel. Expanding in time and completing computations in a plurality of operation cycles enable the apparatus in the embodiments of this disclosure to adapt to any combination of dimensions and to perform tensor computations for different scenarios. Moreover, the computation component in the apparatus in the embodiments of this disclosure is a basic operation unit based on the multiply-accumulate arrays, and may be effectively split and expanded in two-dimensional layout by rows or columns during chip layout at a design phase. Input and output data are split into smaller bandwidths, decomposing bandwidth requirements and reducing implementation difficulty of chip layout. The input and output data may also be decomposed in a KC direction of the convolution kernel to meet different requirements. Each multiply-accumulate array is relatively independent, and Feature or Weight may be broadcasted within the multiply-accumulate array, thereby effectively reducing wiring complexity. In addition, as each level has a plurality of instances, for example, the computation component as a whole includes a plurality columns of multiply-accumulate arrays, and each column includes a plurality of multiply-accumulate arrays, a layout reuse rate can be effectively improved. For example, a layout can be created at any level and a plurality of layouts can be obtained by copying. This hierarchical and modular design brings great possibilities for implementation of technologies such as soft start and clock deviation design. Soft start refers to starting different circuit modules in batches, so as to alleviate voltage pulses during initial startup. The clock deviation design indicates that the circuit modules can work on different clocks, that is, different modules can work together not on a same clock edge, to balance power consumption.

The foregoing embodiments of this disclosure may be implemented separately or in any combination without conflict. This may be specifically set according to actual requirements, and is not limited in this disclosure.

### Exemplary method

FIG. 12 is a schematic flowchart of a tensor computation method according to an exemplary embodiment of this disclosure. The method in this embodiment may be implemented by using the corresponding apparatus described above. As shown in FIG. 12, the method in this embodiment of this disclosure may include the following steps.

Step 510: Obtaining a first tensor and a second tensor that are to be computed.

Step 520: Determining an operation type for the first tensor and the second tensor.

Step 530: Determining, based on the first tensor, the second tensor, and the operation type, a target multiply-accumulate array for a current operation from a plurality of multiply-accumulate arrays of a computation component, and determining a target control mode corresponding to the target multiply-accumulate array.

Any one of the multiply-accumulate arrays is configured to determine a multiply-accumulate result of at least one pair of input values. Any pair of the input values includes a first input value and a second input value, the first input value is a value in the first tensor, and the second input value is a value in the second tensor.

Step 540: Controlling, according to the target control mode, the target multiply-accumulate array to perform operations corresponding to the operation type on the first tensor and the second tensor, to obtain a tensor computation result.

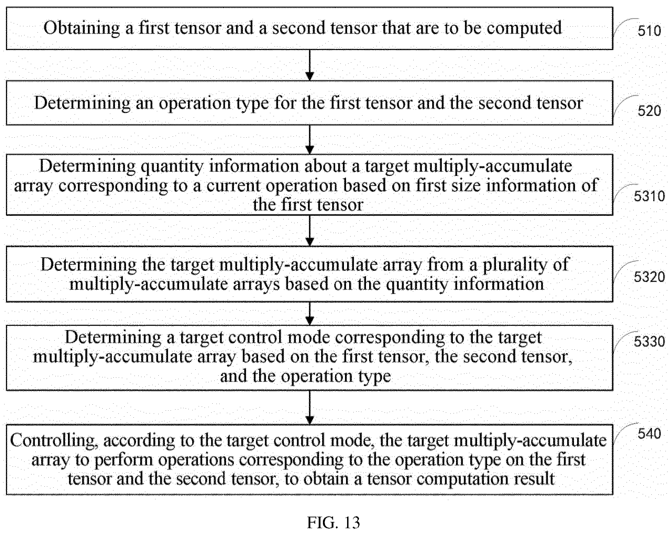

FIG. 13 is a schematic flowchart of a tensor computation method according to another exemplary embodiment of this disclosure.

In some optional embodiments, on the basis of the embodiments shown in FIG. 12, as shown in FIG. 13,

Step 530 of determining, based on the first tensor, the second tensor, and the operation type, a target multiply-accumulate array for a current operation from a plurality of multiply-accumulate arrays of a computation component, and determining a target control mode corresponding to the target multiply-accumulate array may include:

Step 5310: Determining quantity information about the target multiply-accumulate array corresponding to the current operation based on first size information of the first tensor;

Step 5320: Determining the target multiply-accumulate array from the plurality of multiply-accumulate arrays based on the quantity information; and

Step 5330: Determining the target control mode corresponding to the target multiply-accumulate array based on the first tensor, the second tensor, and the operation type.

In some optional embodiments, the plurality of multiply-accumulate arrays include multiply-accumulate arrays arranged in m rows and n columns; and the first size information includes a first height, a first width, and a first depth.

Step 5310 of determining quantity information about the target multiply-accumulate array corresponding to the current operation based on first size information of the first tensor may include:

in response to that the first size information meets a preset size condition, determining, based on the first height, the first width, and the first depth, a target quantity of rows and a target quantity of columns of target multiply-accumulate arrays corresponding to the current operation as the quantity information; or in response to that the first height in the first size information does not meet the preset size condition, determining m as the target quantity of rows of the target multiply-accumulate arrays, determining the first width as the target quantity of columns of the target multiply-accumulate arrays, and determining the target quantity of rows and the target quantity of columns as the quantity information; or in response to that the first width in the first size information does not meet the preset size condition, determining n as the target quantity of columns of the target multiply-accumulate arrays, determining the first height as the target quantity of rows of the target multiply-accumulate arrays, and determining the target quantity of rows and the target quantity of columns as the quantity information.

In some optional embodiments, step 5330 of determining the target control mode corresponding to the target multiply-accumulate array based on the first tensor, the second tensor, and the operation type may include:

in response to that the first size information does not meet a preset size condition, determining the first tensor as at least one first sub-tensor based on the quantity information about the target multiply-accumulate array; and determining the target control mode corresponding to the target multiply-accumulate array based on the first sub-tensor, the second tensor, and the operation type.

In some optional embodiments, step 530 of determining, based on the first tensor, the second tensor, and the operation type, a target multiply-accumulate array for a current operation from a plurality of multiply-accumulate arrays of a computation component may include:

determining, based on the first tensor, the second tensor, the operation type, and status information of the multiply-accumulate arrays in the computation component, the target multiply-accumulate array for the current operation from the multiply-accumulate arrays, among the plurality of multiply-accumulate arrays, of which the status information indicates an idle status.

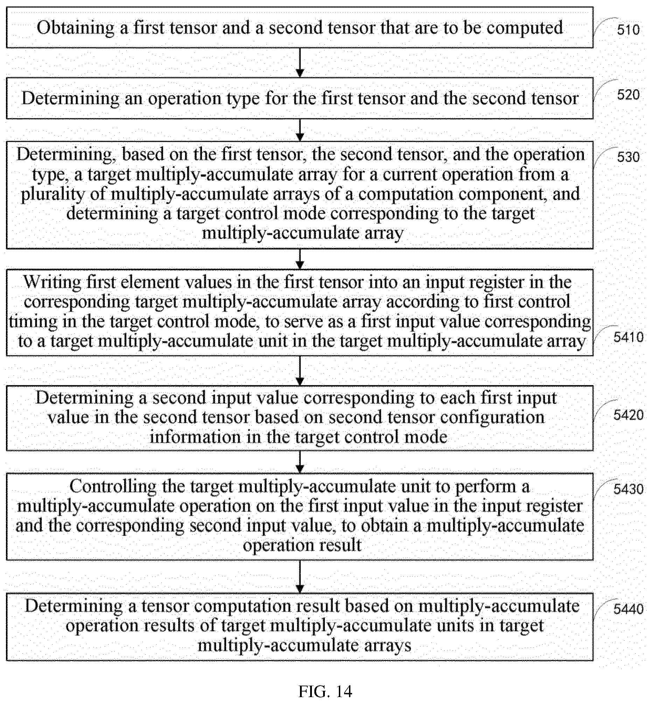

FIG. 14 is a schematic flowchart of a tensor computation method according to still another exemplary embodiment of this disclosure.

In some optional embodiments, on the basis of any one of the foregoing embodiments, any one of the multiply-accumulate arrays includes an input register and a multiply-accumulate unit; and the input register is configured to store at least the first input value.

As shown in FIG. 14, step 540 of controlling, according to the target control mode, the target multiply-accumulate array to perform operations corresponding to the operation type on the first tensor and the second tensor, to obtain a tensor computation result may include:

Step 5410: Writing first element values in the first tensor into the input register in the corresponding target multiply-accumulate array according to first control timing in the target control mode, to serve as the first input value corresponding to a target multiply-accumulate unit in the target multiply-accumulate array;

Step 5420: Determining a second input value corresponding to each first input value in the second tensor based on second tensor configuration information in the target control mode;

Step 5430: Controlling the target multiply-accumulate unit to perform a multiply-accumulate operation on the first input value in the input register and the corresponding second input value, to obtain a multiply-accumulate operation result; and

Step 5440: Determining the tensor computation result based on multiply-accumulate operation results of target multiply-accumulate units in the target multiply-accumulate arrays.

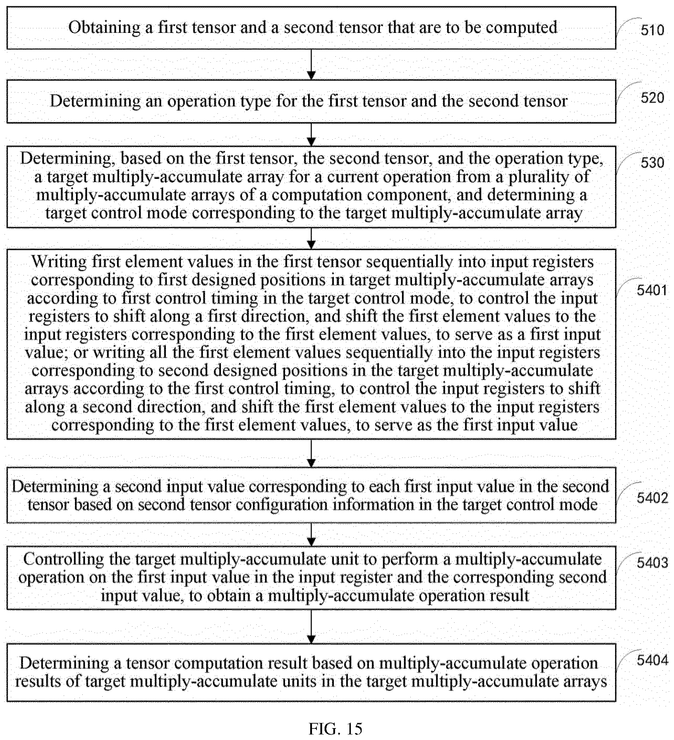

FIG. 15 is a schematic flowchart of a tensor computation method according to yet another exemplary embodiment of this disclosure.

In some optional embodiments, on the basis of any one of the foregoing embodiments, there are a plurality of target multiply-accumulate arrays; and any one of the multiply-accumulate arrays includes an input register and a multiply-accumulate unit. The input register is configured to store at least the first input value, and is a shift register. The input registers of the multiply-accumulate arrays are electrically connected according to a preset arrangement mode.

As shown in FIG. 15, step 540 of controlling, according to the target control mode, the target multiply-accumulate array to perform operations corresponding to the operation type on the first tensor and the second tensor, to obtain a tensor computation result may include:

Step 5401: Writing first element values in the first tensor sequentially into the input registers corresponding to first designed positions in the target multiply-accumulate arrays according to first control timing in the target control mode, to control the input registers to shift along a first direction, and shift the first element values to the input registers corresponding to the first element values, to serve as the first input value; or writing all the first element values sequentially into the input registers corresponding to second designed positions in the target multiply-accumulate arrays according to the first control timing, to control the input registers to shift along a second direction, and shift the first element values to the input registers corresponding to the first element values, to serve as the first input value;

Step 5402: Determining a second input value corresponding to each first input value in the second tensor based on second tensor configuration information in the target control mode;

Step 5403: Controlling the target multiply-accumulate unit to perform a multiply-accumulate operation on the first input value in the input register and the corresponding second input value, to obtain a multiply-accumulate operation result; and

Step 5404: Determining the tensor computation result based on multiply-accumulate operation results of target multiply-accumulate units in the target multiply-accumulate arrays.

In some optional embodiments, any one of the multiply-accumulate arrays includes an input register, a multiply-accumulate unit, and an output register. The input register is configured to store the first input value in the at least one pair of input values. The multiply-accumulate unit is configured to perform a multiply-accumulate calculation on the at least one pair of input values to obtain the multiply-accumulate result of the at least one pair of input values. The output register is configured to store the multiply-accumulate result obtained by the multiply-accumulate unit performing the multiply-accumulate calculation.

In some optional embodiments, the output register is a shift register; there are a plurality of target multiply-accumulate arrays; and the output registers of the multiply-accumulate arrays are electrically connected.

The method in the embodiments of this disclosure further includes: controlling the output register to shift for output in a preset direction after the multiply-accumulate result obtained by the multiply-accumulate unit in the target multiply-accumulate array is written into the output register.

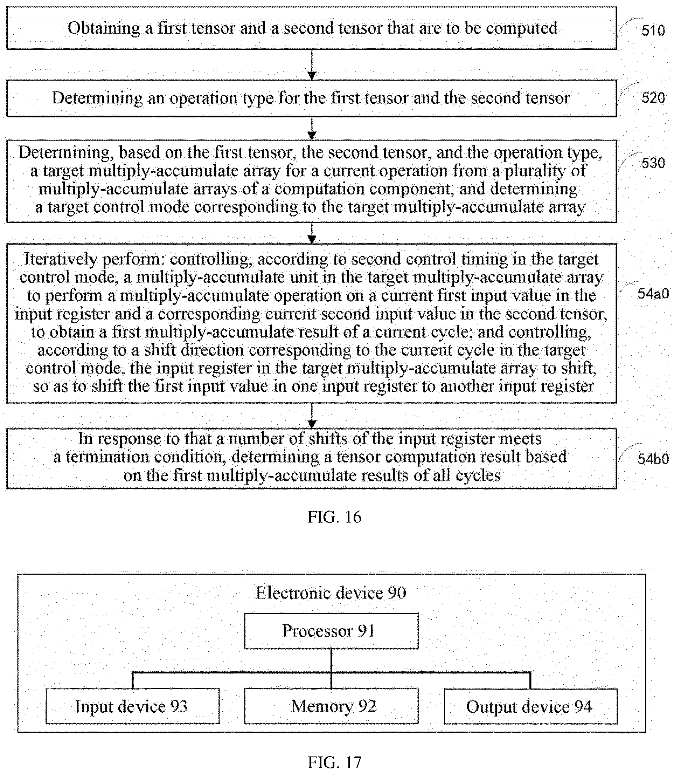

FIG. 16 is a schematic flowchart of a tensor computation method according to still yet exemplary embodiment of this disclosure.

In some optional embodiments, on the basis of any one of the foregoing embodiments, the operation type is a convolution operation; the plurality of multiply-accumulate arrays include multiply-accumulate arrays arranged in m rows and n columns; any one of the multiply-accumulate arrays includes an input register and a multiply-accumulate unit; the input registers are electrically connected according to a preset arrangement mode; and the target multiply-accumulate arrays include s rows and t columns of target multiply-accumulate arrays among the multiply-accumulate arrays arranged in m rows and n columns, where s is less than or equal to m, and t is less than or equal to n;

As shown in FIG. 16, step 540 of controlling, according to the target control mode, the target multiply-accumulate array to perform operations corresponding to the operation type on the first tensor and the second tensor, to obtain a tensor computation result may include:

Step 54a0: Iteratively perform: controlling, according to second control timing in the target control mode, the multiply-accumulate unit in the target multiply-accumulate array to perform a multiply-accumulate operation on a current first input value in the input register and a corresponding current second input value in the second tensor, to obtain a first multiply-accumulate result of a current cycle; and controlling, according to a shift direction corresponding to the current cycle in the target control mode, the input register in the target multiply-accumulate array to shift, so as to shift the first input value in one input register to another input register; and

Step 54b0: In response to that a number of shifts of the input register meets a termination condition, determining the tensor computation result based on the first multiply-accumulate results of all cycles.

For beneficial technical effects corresponding to the exemplary embodiments of this method, reference may be made to the corresponding beneficial technical effects in the section of exemplary apparatus described above, and details are not described herein again.

Any tensor computation method provided in the embodiments of this disclosure may be implemented by any suitable electronic device with a data processing capability, including but not limited to a terminal device, a server, and other electronic devices. Alternatively, any tensor computation method provided in the embodiments of this disclosure may be implemented by a processor. For example, the processor implements any tensor computation method described in the embodiments of this disclosure by invoking corresponding instructions stored in a memory. Details are not described below.

### Exemplary electronic device

FIG. 17 is a diagram of a structure of an electronic device according to an embodiment of this disclosure. The electronic device includes at least one processor 91 and a memory (which may also be referred to as a second memory) 92.

The processor 91 may be a central processing unit (CPU) or another form of processing unit having a data processing capability and/or an instruction execution capability, and may control other components in the electronic device 90 to implement desired functions.

The memory 92 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 91 may execute the one or more program instructions to implement the method according to various embodiments of this disclosure that are described above and/or other desired functions.

In an example, the electronic device 90 may further include an input device 93 and an output device 94. These components are connected to each other through a bus system and/or another form of connection mechanism (not shown).

The input device 93 may further include a touch screen, a microphone, and various sensors. The sensors may include, for example, an image sensor (such as a camera or a lens), a laser radar, a millimeter wave radar, an ultrasonic radar, a positioning sensor, a pressure sensor, an air quality sensor, and a temperature sensor. The image sensor, the laser radar, the millimeter wave radar, and the ultrasonic radar may be used to sense surrounding environments, that is, to detect dynamic and static objects in the surrounding environments. The dynamic and static objects may include static objects such as a lane marking, a road edge, an arrow, a sign, a trees, and a building, and dynamic objects such as a surrounding vehicle, a pedestrian, and a cyclist. The positioning sensor is used to locate a mobile device (such as a vehicle or a robot) where the electronic device is located. The positioning sensor may include, for example, an inertial measurement unit (IMU for short) and a global positioning system (GPS for short). The pressure sensor may be used to detect seat pressure. The temperature sensor may be used to detect temperature inside a vehicle cockpit. The air quality sensor may be used to detect air quality inside the vehicle cockpit.

The output device 94 may output various information to the outside, and may include, for example, a display, a speaker, a communication network, and a remote output device connected to the communication network.

Certainly, for simplicity, FIG. 17 shows only some of components in the electronic device 90 that are related to this disclosure, and components such as a bus and an input/output interface are omitted. In addition, according to specific application situations, the electronic device 90 may further include any other appropriate components.

In some optional embodiments, the electronic device 90 may include the tensor computation apparatus provided in any one of the foregoing embodiments.

An embodiment of this disclosure further provides a chip, which may include the tensor computation apparatus 20 according to any one of the foregoing embodiments.

### Exemplary computer program product and computer readable storage medium

In addition to the foregoing method and device, embodiments of this disclosure may also provide a computer program product, which includes computer program instructions. When the computer program instructions are run by a processor, the processor is enabled to perform the steps, of the method according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for the embodiments of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A tensor computation apparatus (20), **characterized in that** the apparatus comprising:
a memory (21), configured to store a first tensor and a second tensor that are to be computed;
a controller (22), configured to read the first tensor and the second tensor from the memory (21), and determine an operation type for the first tensor and the second tensor; and
a computation component (23), comprising a plurality of multiply-accumulate arrays, wherein any one of the multiply-accumulate arrays (23i) is configured to determine a multiply-accumulate result of at least one pair of input values, any one pair of the input values comprises a first input value and a second input value, the first input value is a value in the first tensor, and the second input value is a value in the second tensor, wherein
the controller (22) is further configured to: determine, based on the first tensor, the second tensor, and the operation type, a target multiply-accumulate array (23i) for a current operation from the plurality of multiply-accumulate arrays (23i) of the computation component (23), and determine a target control mode corresponding to the target multiply-accumulate array (23i); and control, according to the target control mode, the target multiply-accumulate array (23i) to perform operations corresponding to the operation type on the first tensor and the second tensor, to obtain a tensor computation result.

2. The apparatus according to claim 1, wherein the controller (22) is configured to:
determine quantity information about the target multiply-accumulate array (23i) corresponding to the current operation based on first size information of the first tensor;
determine the target multiply-accumulate array (23i) from the plurality of multiply-accumulate arrays (23i) based on the quantity information; and
determine the target control mode corresponding to the target multiply-accumulate array (23i) based on the first tensor, the second tensor, and the operation type.

3. The apparatus according to claim 2, wherein the plurality of multiply-accumulate arrays comprise multiply-accumulate arrays (23mn) arranged in m rows and n columns;
the first size information comprises a first height, a first width, and a first depth of the first tensor; and
the controller (22) is specifically configured to: in response to that the first size information meets a preset size condition, determine, based on the first height, the first width, and the first depth, a target quantity of rows and a target quantity of columns of target multiply-accumulate arrays (23mn) corresponding to the current operation as the quantity information; or
in response to that the first height in the first size information does not meet the preset size condition, determine the m as the target quantity of rows of the target multiply-accumulate arrays (23mn), determine the first width as the target quantity of columns of the target multiply-accumulate arrays (23mn), and determine the target quantity of rows and the target quantity of columns as the quantity information; or
in response to that the first width in the first size information does not meet the preset size condition, determine the n as the target quantity of columns of the target multiply-accumulate arrays (23mn), determine the first height as the target quantity of rows of the target multiply-accumulate arrays (23mn), and determine the target quantity of rows and the target quantity of columns as the quantity information.

4. The apparatus according to claim 2, wherein the controller (22) is specifically configured to:
in response to that the first size information does not meet a preset size condition, determine the first tensor as at least one first sub-tensor based on the quantity information about the target multiply-accumulate array (23i); and
determine the target control mode corresponding to the target multiply-accumulate array (23i) based on the first sub-tensor, the second tensor, and the operation type.

5. The apparatus according to any one of claims 1 to 4, wherein any one of the multiply-accumulate arrays (23i) comprises an input register (buf) and a multiply-accumulate unit (MAC);
the input register (buf) is configured to store at least the first input value; and
the controller (22) is specifically configured to:
write first element values in the first tensor into the input register (buf) in the corresponding target multiply-accumulate array (23i) according to first control timing in the target control mode, to serve as the first input value corresponding to a target multiply-accumulate unit (MAC) in the target multiply-accumulate array (23i);
determine a second input value corresponding to each first input value in the second tensor based on second tensor configuration information in the target control mode;
control the target multiply-accumulate unit (MAC) to perform a multiply-accumulate operation on the first input value in the input register (buf) and the corresponding second input value, to obtain a multiply-accumulate operation result; and
determine the tensor computation result based on multiply-accumulate operation results of target multiply-accumulate units (MAC) in the target multiply-accumulate arrays (23i).

6. The apparatus according to any one of claims 1 to 5, there are a plurality of target multiply-accumulate arrays (23i), and any one of the multiply-accumulate arrays (23i) comprises an input register (buf) and a multiply-accumulate unit (MAC);
the input register (buf) is configured to store at least the first input value; the input register (buf) is a shift register; the input registers (buf) of the multiply-accumulate arrays (23i) are electrically connected according to a preset arrangement mode; and
the controller (22) is specifically configured to:
write first element values in the first tensor sequentially into the input registers (buf) corresponding to first designed positions in the target multiply-accumulate arrays (23i) according to first control timing in the target control mode, to control the input registers (buf) to shift along a first direction, and shift the first element values to the input registers (buf) corresponding to the first element values; or
write the first element values sequentially into the input registers (buf) corresponding to second designed positions in the target multiply-accumulate arrays (23i) according to the first control timing, to control the input registers (buf) to shift along a second direction, and shift the first element values to the input registers (buf) corresponding to the first element values.

7. The apparatus according to any one of claims 1 to 6, wherein any one of the multiply-accumulate arrays (23i) comprises an input register (bufl), a multiply-accumulate unit (MAC), and an output register (buf2);
the input register (bufl) is configured to store the first input value in the at least one pair of input values;
the multiply-accumulate unit (MAC) is configured to perform a multiply-accumulate calculation on the at least one pair of input values to obtain the multiply-accumulate result of the at least one pair of input values; and
the output register (buf2) is configured to store the multiply-accumulate result obtained by the multiply-accumulate unit (MAC) performing the multiply-accumulate calculation.

8. The apparatus according to claim 7, wherein the output register (buf2) is a shift register, and there are a plurality of target multiply-accumulate arrays (23i);
the output registers (buf2) of the multiply-accumulate arrays (23i) are electrically connected; and
the controller (22) is further configured to control the output register (buf2) to shift for output in a preset direction after the multiply-accumulate result obtained by the multiply-accumulate unit (MAC) in the target multiply-accumulate array is written into the output register (buf2).

9. The apparatus according to any one of claim 1 to 8, wherein the operation type is a convolution operation;
the plurality of multiply-accumulate arrays (23i) comprise multiply-accumulate arrays (23i) arranged in m rows and n columns, any one of the multiply-accumulate arrays (23i) comprises an input register (bufl) and a multiply-accumulate unit (MAC), and the input registers (bufl) are electrically connected according to a preset arrangement mode;
the target multiply-accumulate arrays (23i) comprise multiply-accumulate arrays (23i) arranged in s rows and t columns, wherein s is less than or equal to m, and t is less than or equal to n; and
the controller (22) is specifically configured to:
iteratively perform: control, according to second control timing in the target control mode, the multiply-accumulate unit (MAC) in the target multiply-accumulate array (23i) to perform a multiply-accumulate operation on a current first input value in the input register (bufl) and a corresponding current second input value in the second tensor, to obtain a first multiply-accumulate result of a current cycle; and control, according to a shift direction corresponding to the current cycle in the target control mode, the input register (bufl) in the target multiply-accumulate array (23i) to shift, so as to shift the first input value in one input register (bufl) to another input register (bufl); and
in response to that a number of shifts of the input register (bufl) meets a termination condition, determine the tensor computation result based on the first multiply-accumulate result obtained from an iteration.

10. The apparatus according to any one of claims 1 to 9, wherein the controller (22) is specifically configured to:
determine, based on the first tensor, the second tensor, the operation type, and status information of the multiply-accumulate arrays (23i) in the computation component (23), the target multiply-accumulate array (23i) for the current operation from the multiply-accumulate arrays (23i), among the plurality of multiply-accumulate arrays (23i), of which the status information indicates an idle status.

11. A tensor computation method, **characterized in that** the tensor computation method comprises:
obtaining (510) a first tensor and a second tensor that are to be computed;
determining (520) an operation type for the first tensor and the second tensor;
determining (530), based on the first tensor, the second tensor, and the operation type, a target multiply-accumulate array for a current operation from a plurality of multiply-accumulate arrays of a computation component, and determining a target control mode corresponding to the target multiply-accumulate array, wherein any one of the multiply-accumulate arrays is configured to determine a multiply-accumulate result of at least one pair of input values, any one pair of the input values comprises a first input value and a second input value, the first input value is a value in the first tensor, and the second input value is a value in the second tensor; and
controlling (540), according to the target control mode, the target multiply-accumulate array to perform operations corresponding to the operation type on the first tensor and the second tensor, to obtain a tensor computation result.

12. The tensor computation method according to claim 11, wherein the determining (530), based on the first tensor, the second tensor, and the operation type, a target multiply-accumulate array for a current operation from a plurality of multiply-accumulate arrays of a computation component, and determining a target control mode corresponding to the target multiply-accumulate array comprises:
determining (5310) quantity information about the target multiply-accumulate array corresponding to the current operation based on first size information of the first tensor;
determining (5320) the target multiply-accumulate array from the plurality of multiply-accumulate arrays based on the quantity information; and
determining (5330) the target control mode corresponding to the target multiply-accumulate array based on the first tensor, the second tensor, and the operation type.

13. A chip, **characterized in that** the chip comprises:
the tensor computation apparatus (20) according to any one of claims 1 to 10.

14. A computer readable storage medium, wherein the storage medium stores a computer program, when executed by a processor, causes the processor to implement the tensor computation method according to claim 11 or 12.

15. An electronic device (90), **characterized in that** the electronic device comprises:
a processor (91); and
a memory (92), configured to store processor-executable instructions, wherein
the processor (91) is configured to read the executable instructions from the memory (92), and execute the instructions to implement the tensor computation method according to claim 11 or 12; or
the electronic device comprises the tensor computation apparatus according to any one of claims 1 to 10.
